# EUROPEAN PATENT APPLICATION

(11) **EP 3 203 424 A1**
(43) Date of publication of application: **09.08.2017**
(21) Application number: 17158535.9
(22) Date of filing: 17.03.2011
(51) Int. Cl.: G06Q 20/00, G06Q 30/00, G06Q 30/02, H04W 4/02, H04W 4/20

(54) **SECURITY FOR MOBILE DEVICE**

(30) Priority: 23.03.2010 US 316527 P; 04.06.2010 US 351743 P; 22.06.2010 US 820672; 22.06.2010 US 820705; 30.09.2010 US 894287; 30.09.2010 US 894323
(62) Divisional of application: 11759940.7
(71) Applicant: Amazon Technologies, Inc., Reno, NV 89507 (US)
(72) Inventor: RAMALINGAM, Harsha, Seattle, WA Washington 98109-5210 (US); WALSH, Paul, Seattle, WA Washington 98109-5210 (US); CARR, Michael, Seattle, WA Washington 98109-5210 (US); LATHIA, Bhavnish, Seattle, WA Washington 98109-5210 (US); CHUANG, James, Seattle, WA Washington 98109-5210 (US)
(74) Representative: Tyson, Robin Edward

(57) **Abstract**

A computer-implemented method for initiating a security event in response to a current temporal-geolocation of a mobile device varying from points in a map by more than a threshold amount, the computer-implemented method comprising:
storing, by one or more computing systems, at a plurality of different times and different locations, a geolocation of the mobile device and a timestamp associated with the geolocation to create temporal-geolocation data;
creating, by at least one of the one or more computing systems, the map for the mobile device based at least in part on the temporal-geolocation data;
comparing, by at least one of the one or more computing systems, a current temporal-geolocation with the map to determine if the current temporal-geolocation varies from the map by more than a threshold amount; and
initiating, by at least one of the one or more computing systems, a security event in response to the current temporal-geolocation varying from the map by more than the threshold amount.

## Description

### RELATED APPLICATIONS

This application claims the benefit of U.S. Provisional Application Nos. 61/316,527 filed on March 23, 2010 and 61/351,743 filed on June 4, 2010 and U.S. Patent Application Nos. 12/820,672 filed on June 22, 2010, 12/820,705 filed on June 22, 2010, 12/894,287 filed on September 30, 2010, and 12/894,323 filed on September 30, 2010.

### BACKGROUND

The widespread use of mobile phones and the increasing sophistication of smart phones have created societies in which personal, mobile computing power has become nearly ubiquitous. Content for mobile computing devices has typically flowed from technology initially used with desktop computers. Some aspects of mobile computing devices, such as a small form factor with limited display capabilities and a lack of full-size keyboards, hinder adoption of content originally designed for desktop computers. Other aspects, such as the mobility itself, provide unique opportunities to use mobile computing devices in ways very different than desktop computers. Development of content that recognizes the limitations while taking full advantage of the unique aspects of mobile computing devices is an active and maturing field.

Consumers are also becoming increasingly comfortable with virtual interactions, such as online shopping. However, in spite of the relative convenience of the virtual world, as opposed to the brick-and-mortar world, friction and security concerns still limit adoption of virtual interactions. For example, remembering passwords and maintaining multiple accounts create friction in virtual-world interactions. Additionally, the anonymity and lack of direct interaction between the consumer and the merchant create potential security problems. Accordingly, content designed specifically for mobile computing devices that eliminates the friction of transactions and addresses securities concerns will have great value for consumers.

Although some merchants have both online or web-based stores as well as brick-and-mortar stores, the online and brick-and-mortar worlds are largely separate. However, mobile computing devices allow someone to be both "online" and at a brick-and-mortar merchant simultaneously. For some transactions such as purchasing goods or services, consumers may be primarily concerned about price, convenience, and quality rather than the online or off-line format of the transaction. Additionally, advertising and marketing opportunities that cover both the brick-and-mortar and the online worlds may present additional ways for merchants to reach potential consumers. Accordingly, the convergence of an online presence and a real-world location can facilitate transactions and enhance advertising to the benefit of both consumers and merchants.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical items.
Fig. 1 shows an illustrative architecture for facilitating efficient transactions between a user of a mobile device, a merchant, and an online retailer.
Fig. 2 shows the mobile device from Fig. 1 in greater detail.
Fig. 3 shows the server(s) from Fig. 1 in greater detail.
Fig. 4 shows the user information from Fig. 1 in greater detail.
Fig. 5 shows the merchant profiles, and advertisement database from Fig. 1 in greater detail.
Fig. 6 is a flow diagram of an illustrative process for automatically completing a transaction between a user of a mobile device and a merchant.
Fig. 7 is a flow diagram of an illustrative process for completing a purchase by sharing information about the mobile device user with a merchant.
Fig. 8 is a flow diagram of an illustrative process for setting up a mobile device to conduct low-friction (e.g., zero-interaction or single-interaction) transactions with a merchant.
Fig. 9 shows an illustrative architecture for a user of a mobile device to complete a transaction with a merchant upon arrival at the geolocation of the merchant.
Fig. 10 is a flow diagram of an illustrative process for completing a transaction with a merchant when a mobile device and the user of the mobile device arrives at the merchant.
Fig. 11 shows an illustrative architecture for conducting transactions between a child device and a merchant mediated by a parent device.
Fig. 12 is a flow diagram of an illustrative process for completing a transaction between a child device and a merchant and transmitting an indication of the transaction to a parent device.
Fig. 13 shows an illustrative map of temporal-geo-locations of a mobile device during a workday of a user of the mobile device.
Fig. 14 is a flow diagram of an illustrative process for securing a mobile device based on variance from a map of temporal-geo-locations.
Fig. 15 is a flow diagram of an illustrative process for securing a mobile device based on biometric data.
Fig. 16 shows an illustrative architecture for providing merchant advertisements or promotions to mobile devices at or near the merchant.
Fig. 17 is a flow diagram of an illustrative process for presenting advertisements on a mobile device based on bids submitted by merchants.
Fig. 18 is a flow diagram of an illustrative process for providing a promotion to mobile devices when a number of mobile devices at a merchant exceeds a threshold.
Fig. 19 is a flow diagram of an illustrative process for sending a coupon to a mobile device.
Fig. 20 is a flow diagram of an illustrative process for providing coupons to mobile devices based on aggregate group behavior.
Fig. 21 is a flow diagram of an illustrative process for activating a coupon on a mobile device in response to a user login.
Fig. 22 shows an illustrative architecture for a user of a mobile device to selectively interact with merchants having certain goods and/or services for sale within a predetermined proximity of the mobile device.
Figs. 23A and 23B are a flow diagram of an illustrative process for notifying a user of a mobile device when a nearby merchant has a good or service for sale that is of interest to the user.
Fig. 24 is a flow diagram of an illustrative process for recommending a nearby merchant and an online good or service to a user of a mobile device.
Fig. 25 shows an illustrative timeline in which an electronic document on a mobile device contains a coupon that is activated when the mobile device is located at a merchant.
Fig. 26 is a flow diagram of an illustrative process for activating a coupon in an electronic document when a mobile device is located a merchant.

### DETAILED DESCRIPTION

Many activities are defined in whole or part by the location at which those activities occur. In some instances, the activity can be inferred with a high likelihood of accuracy based on the location alone. For example, a car at a tollbooth likely there to pay the toll and pass through, a person waiting by a boarding gate for an airplane is likely a ticket holder for the flight, a person with a reservation at a hotel is likely going to check in to the hotel when he or she arrives in the lobby. At some locations many types of activities may be probable, but there are certain activities that will only happen at those locations. For example, many things may happen at the entry to a house, but arming or disarming a home security system will only be done at that location. A mobile computing device that is location-aware and can predict or infer what a user may be doing at that location will be able to automate some activities and provide a high level of user convenience.

This disclosure is directed to, in part, facilitating transactions based on geolocation and unique user identification. For instance, these transactions may include electronic commerce transactions or any other type of transaction. Innovations in electronic commerce, such as a one-click shopping cart, have made the "Internet shopping" experience smoother and have reduced friction perceived by the user. For instance, clicking a single button to complete a purchase requires fewer steps than entering a password, address, credit card number, and such. The reduction of steps, clicks, and the like reduces the friction in a transaction. Commerce in the brick-and-mortar world causes the consumer even more friction than transactions in the electronic commerce world in some instances. For example, describing the item one wishes to purchase, presenting payment to a cashier, waiting for the cashier to process the payment, and eventually receiving the desired item is an example of a typical, and relatively high-friction, brick-and-mortar transaction.

Access to the World Wide Web from mobile devices provides a platform for electronic commerce similar to Internet shopping from a desktop computer. Mobile computing devices, such as mobile phones, are often carried with users throughout their daily interactions in the brick-and-mortar world. Many of these mobile computing devices are equipped with Global Positioning System (GPS) functionality to determine a location of the device, and thus, a location of the corresponding user. This disclosure combines the location awareness of mobile devices with the relatively lower friction transactions of electronic commerce to create a friction-free or, in some instances, a "zero-click" solution for interactions between consumers and merchants in the brick-and-mortar world. Unique user identification provides a thread that ties together information about a particular user (e.g., credit card data), a link between that user and a given mobile computing device, and the relationship that user wishes to have with a given merchant (e.g., opt in to zero-click purchasing).

A merchant may include any human or legal person such as, but not limited to, sellers of goods or services that engages in transactions with customers. For example, a government may be a merchant in the context of providing government services, privileges, and/or rights. An online retailer may also include any human or legal person that is a seller of goods or services, but an online retailer engages in remote transactions with customers over an electronic communications network (for example, but not limited to, website-based retailers). A single company may have both a web presence and brick-and-mortar stores so that aspects of the same company can be classified as an online retailer and as a merchant.

Mobile devices that provide wireless connection to the Internet (or other network) allow access to what may be called the "mobile web." The mobile web may be accessed from a coffee shop, a park, an airport, a shopping mall, or any other location where there is a sufficient wireless signal. With the mobile web, access to the Internet is no longer limited to offices, libraries, dorm rooms, and such places with a computer and an Internet connection. Many of the mobile devices that provide access to the mobile web are also equipped with a Global Positioning System (GPS) or other type of location sensing technology. Therefore, the Internet accessed by a mobile device could be thought of "existing" at the specific geographic location or "geolocation" of the mobile device. Thus, content from the Internet (or from another source such as a local storage device) presented to a user of a mobile device may differ depending on a geolocation of the mobile device.

This disclosure is directed to, in part, providing information to a user of a mobile device. For instance, if a good or service that the user may wish to purchase is for sale at a nearby merchant, that information may be provided to the user. One source of information about the user carrying the mobile device may be that user's web-identity which could contains such information as past purchases made from online retail websites, a wish list of items selected by the user, web pages the user has frequently or recently viewed, and the like. The web-identity may suggest what types of good and/or services the user desires and the geolocation of the mobile device may suggest convenient, nearby brick-and-mortar merchants. This combination of web-identity and physical location may also be used to suggest that the user purchase a good or service from a nearby merchant instead of an online retailer.

This disclosure is directed to, in further part, providing additional access to content based on geolocation. The content may be a promotion, such as a coupon, that provides the user with a financial incentive to go to (along with his or her mobile device) a particular geolocation. The geolocation may be a merchant that wishes to bring potential customers into the store by making, for example, a coupon available only inside the store. The coupon may be related to the goods and/or services sold by the merchant or related to goods and/or services sold by an online retailer. The content may also be provided after the user goes to multiple locations (e.g., several merchants) and logs in or checks in with a server or other computer at each of those locations.

The described techniques may be implemented in a number of ways and in a number of contexts. Example implementations and context are provided with reference to the following figures, as described below in more detail. It is to be appreciated, however, that the following implementations and contexts illustrative of many possible implementations and contexts

### Illustrative Environment and System Architecture

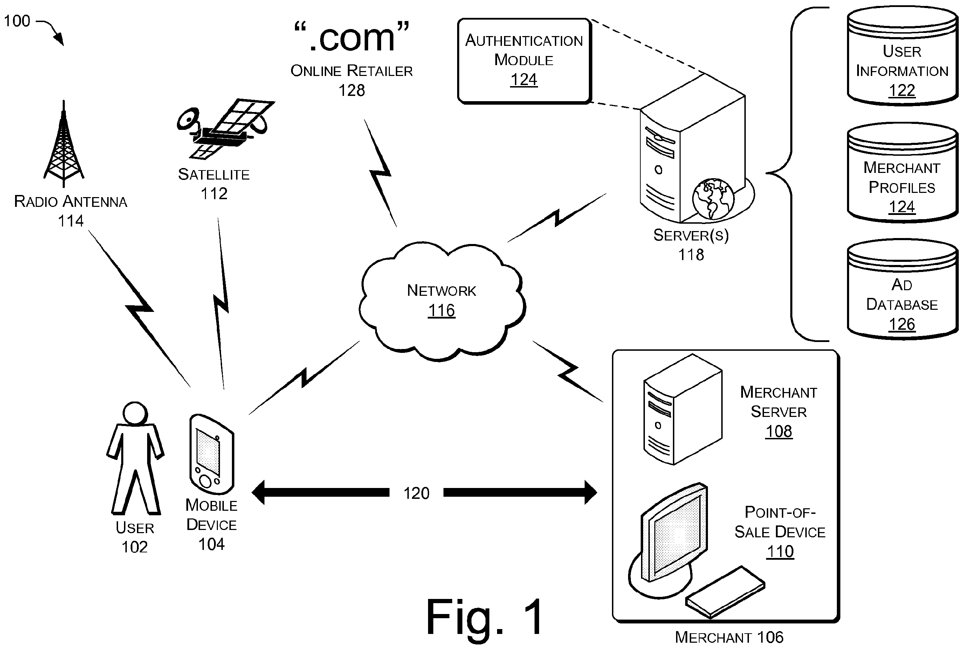

Fig. 1 shows an illustrative architecture 100 in which a representative user 102 employs a mobile device 104 to interact with a merchant 106. The merchant 106 may comprise a merchant server 108 and a point-of-sale device 110 (e.g., a "cash register") and. In some implementations, there may be one merchant server 108 for several point-of-sale devices 110. The merchant server 108 may also include merchant applications that manage interactions between the merchant 106 and the mobile device 104. The merchant applications may include applications that regulate point-of-sale transactions, online transactions, the provisioning of advertisements, promotions, coupons, information, and the like. The merchant server 108 may also store customer information about past or potential future customers. In some implementations, the customer information may comprise information such as personal information about the customer, customer preferences, and the like.

The mobile device 104 may be implemented as any number of mobile devices, including but not limited to a mobile phone, a personal digital assistant (PDA), a laptop computer, a net book, an eBook reader, a personal media player (PMP), a portable gaming system, an automobile navigation system, and so forth. The device 104 is location aware, or is able to provide information to another entity (e.g., a server computer) to allow the other entity to determine a location of the device 104. A location on the surface of the earth, or a "geolocation," may be provided to the device by a satellite 112 such as a GPS satellite. Alternatively, wireless signals such as from a radio antenna 114 may be used to determine a geolocation of the device 104 relative to a known position of the radio antenna 114. Other technologies and methods for determining geolocation are also envisioned within the scope of this disclosure such as, for example, calculating geolocation based on a network access point (e.g., WiFi hotspot) or from a locator signal broadcast from a known location, such as at the merchant 106.

The device 104 and the merchant 106 may connect to a network 116. The network 116 may include any one or combination of multiple different types of networks, such as cable networks, local area networks, personal area networks, wide area networks, the Internet, wireless networks, ad hoc networks, mesh networks, and/or the like. In some implementations the satellite 112 and/or the radio antenna 114 may provide network connectivity to the mobile device 104 as well as provide geolocation. For example, the radio antenna 114 may provide network access to the mobile device 104 according to the International Mobile Telecommunications-2000 standards ("3G network") or the International Mobile Telecommunications Advanced standards ("4G network"). Other implementations may include one source of geolocation data such as the satellite 112 and a separate source of network connectivity such as a WiFi hotspot. The merchant 106 may connect to the network 116 through the merchant server 108 using any suitable mechanism such as a wired or wireless connection.

A one or more servers 118 may also be connected to the network 116 and configured to manage interaction between the mobile device 104 and the merchant 106. In some implementations, all or part of the interaction between the mobile device 104 and the merchant 106 may be through a direct communications link 120 without passing through the server 118 or the network 116. The direct communication link 120 may be implemented by radio transmissions (e.g., IEEE 802.11, Bluetooth), infrared signals, radio frequency identification (RFID), magnetism (e.g., magnetic strips such as used on credit cards), display of a code on the device 104 to a human operator or to a scanning device at the merchant 106, and/or any other method of directly passing information between the mobile device 104 and the merchant 106.

The server(s) 118 may house or otherwise have a connection to multiple data stores including user information 122, merchant profiles 124, an advertisement ("ad") database 126, and/or other data stores. Generally, the user information 122 contains information about the user 102 associated with the mobile device 104. The user information 122 enables efficient and personalized interaction between the user 102 and the merchant 106. The merchant profiles 124 generally contain information about one or more merchants including the merchant 106 with which the user 102 is interacting. Types of interaction between the merchant 106 and the user 102 includes advertising provided from the merchant 106 to the device 104 and purchasing a good and/or service from the merchant 106 when the user 102 is at the merchant location. Information for generating relevant advertisements may be contained in the advertisement database 126. Information about which goods and/or services the user is be interested in purchasing may be contained in the user information 122. Each of the data stores will be discussed in greater detail below.

The server(s) 118 may also comprise an authentication module 124 that compares login information from the mobile device 104 and/or the merchant 106 to confirm that the correct user information 122, merchant profiles 124, advertisement database 126, and other information is correctly correlated with the right entity (e.g., user 102 and/or point-of-sale device 110). The authentication module 124 will be discussed in greater detail below.

One or more online retailers 128 may also be connected to the network 116. The online retailer(s) 128 may offer goods and/or services for sale over the network 116 without having a brick-and-mortar merchant location. Each of the mobile device 104, the merchant 106, the server(s) 118 and the online retailer(s) 126 may communicate with one another over the network 116. One company or store may have both an online retailer 128 and one or more merchants 106 located at multiple geolocations.

### Illustrative Mobile Device

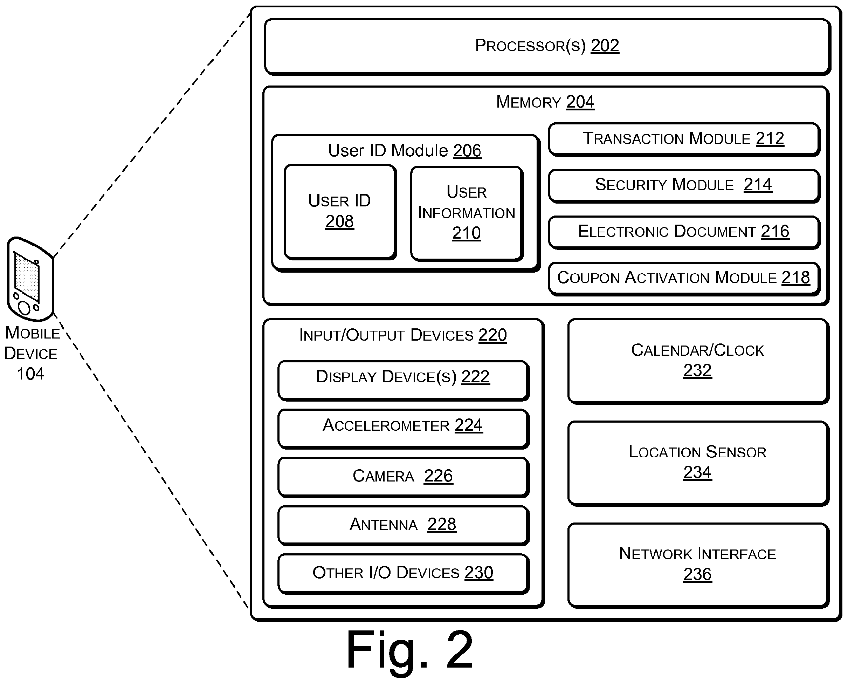

Fig. 2 is a schematic representation of the mobile device 104 of Fig. 1. The mobile device 104 includes one or more processors 202 and a memory 204. The memory may contain a user identification module 206 that in may turn contain a user identifier 208 and/or user information 210. The memory 204 may also contain a transaction module 212, and a security module 214, an electronic document 216, and a coupon activation module 218. The user identifier 208 may be a unique number or code that uniquely identifies the user 102 of the mobile device 104. This user identifier 208 may be the same user identifier 208 that the user 102 uses for interacting with online retailers 128 and the like. In some implementations, the user identifier 208 may be entered by the user 102 into the mobile device 104 during a setup procedure such as by entering a user name and a password. In other implementations, the user identifier 208 may be included in hardware of the mobile device 104. For example, a unique serial number of the mobile device 104 may be linked with a user name and password when the user 102 purchases the device 104. As a further example, a subscriber identification module (SIM) on a removable SIM card within the device 104 may contain the user identifier 208. In this example, the user identification 208 may be identifier between devices by moving the SIM card.

The device 104 may also contain user information 210 stored locally in the memory 204. This information may be configurable by the user 102 and can include payment information, a home location, and/or map of the device's 104 past movements, past transaction histories, and/or any other information related to the user 102.

The transaction module 212 may recognize when the mobile device 104 is located at a merchant location and, in response, may facilitate a transaction with the merchant 106. The transaction may be based in part on the user information 210. The transaction module 212 may be configured with appropriate application programming interfaces (APIs) to establish a standard communication protocol for receiving information from the merchant 106 (e.g., merchant name and requested payment) and providing corresponding information about the user 102 (e.g., payment information and user identification 208). In some implementations, the transaction module 212 is a software application that a user 102 may install on his or her device 104 such as by downloading from a website. In other implementations, the transaction module 212 may be preinstalled by a manufacturer or retailer of the mobile device 104 and/or built into the mobile device 104 as a type of firmware or hardware. The transaction module 212 coordinates the user identification 208, user information 210, geolocation, and the like to facilitate transactions between the user 102 and the merchant 106.

Given the ability of the mobile device 104 to serve as a platform for zero-click purchases, there is a need to provide security in order to prevent unauthorized charges. The security module 214 addresses this need by limiting functionality of the mobile device 104 and initiating security events in appropriate circumstances. The security module 214 may process login information, such as passwords and/or biometric information to authenticate the user 102 and prevent other people from using the mobile device 104. The security module 214 may also analyze behavior such as purchasing patterns and/or movement patterns and infer that irregular behavior may indicate fraudulent or unauthorized activity and limit device functionality accordingly, as described below in greater detail.

The memory 204 may also contain an electronic document 216. The electronic document 216 may be any type of electronic document accessed by a computing device such as a word processing document, a spreadsheet document, an email, a web page, an eBook, and the like. In some implementations discussed below, the electronic document 216 may include a coupon. The coupon may be associated with one or more merchants.

The terms "book" and/or "eBook," as used herein, include electronic or digital representations of printed works, as well as digital content that may include text, multimedia, hypertext, and/or hypermedia. Examples of printed and/or digital works include, but are not limited to, books, magazines, newspapers, periodicals, journals, reference materials, telephone books, textbooks, anthologies, instruction manuals, proceedings of meetings, forms, directories, maps, web pages etc. Accordingly, the terms book and/or eBook may include any content that is in electronic or digital format.

In some implementations, the mobile device 104 may facilitate transactions either online or with a merchant 106 while the user 102 is present at that merchant. Transactions may be fully completed using the mobile device 104 for initiating and paying for the transaction. Digital or electronic coupons may occasionally be provided to the mobile device 104. These coupons may provide a discount to the user 102 of the mobile device 104 when he or she makes a purchase.

A coupon activation module 218 may regulate use and redemption of coupons based on geolocation and/or other factors. The coupon activation module 218 may activate a coupon when the mobile device 104 is located at a merchant 106. Prior to activation, the coupon activation module 218 may conceal all or part of the coupon from the user 102. For example, the user reading an electronic document 214 may be unable to see a coupon included in that electronic document 214 unless the user takes the mobile device 104 inside a certain merchant 106. In other examples, the user 102 may know that the electronic document 214 contains a coupon, but be unable to view the amount of discount or other aspect of the coupon until the user 102 and the mobile device 104 are at the merchant 106.

Mobile device 104 also includes one or more input and output devices 220. The output devices may comprise one or more display devices 222 including touch-screen displays that also function as an input device. An accelerometer 224 detects rotation or vibration of the mobile device 104. The accelerometer 224 may be a convenient mechanism for the user 102 to communicate an input to the mobile device 104 by slapping, shaking, twisting, and/or by making a motion that can be detected by the accelerometer 224. The mobile device 104 may also include a camera 226 capable of taking still or video pictures. An antenna 228 in the mobile device 104 may send and receive wireless signals from sources such as the radio antenna 114 and satellite 112. The antenna 228 may, in some implementations, communicate directly with a merchant 106 such as by exchanging wireless signals with the point-of-sale device 110 located at the merchant 106. The device 104 may further comprise other input/output devices 230, such as a microphone and a speaker used, for example, in an implementation in which the mobile device 104 functions as a telephone.

In some implementations, the mobile device 104 may also include a calendar/clock 232, a location sensor 234, and a network interface 236. The calendar/clock 232 may calculate time, date, and other data that can be derived from time data and date data. In some implementations, the calendar/clock 232 may communicate with the location sensor 234 to determine, for example, day length at the current location of the device 104 based on the date. This could enable the device 104 to determine whether it is daytime or nighttime based on the time, date, and geolocation.

The calendar/clock 232 and the location sensor 234 may also communicate to create a log of where the device 104 is located at numerous time points. The log of time-place data may be compiled into a map that shows movements of the device overtime and throughout different dates. This map may be stored in the memory 204, for example as a part of the user information 210. The location sensor 234 includes any sort of system that informs the mobile device 104 of its geolocation including, but not limited to, the Global Positioning System of satellites circling the Earth. Alternatively, the location sensor may determine geolocation by radio signal triangulation (e.g., triangulation based on radio antenna signal strength).

The network interface 236 may be configured for wirelessly communicating with the network 116. The network interface 236 may use any standard protocols for network communication. The network interface 236 may be capable of high speed, wireless network communication. In some implementations, the network interface 236 may use the antenna 228 to send and receive data from the network 116. In further implementations, a network interface 236 may provide information to the location sensor 234 (e.g., a closest network access point) from which the location sensor 234 can infer or calculate a location of the mobile device 104. In some implementations, the coupon activation module 218 may activate a coupon in response to a signal received from a merchant 106 via the network interface 236. In other implementations the coupon activation 218 module may activate a coupon when the mobile device 104 is within a predetermined proximity of a merchant associated with the coupon.

### Illustrative Server

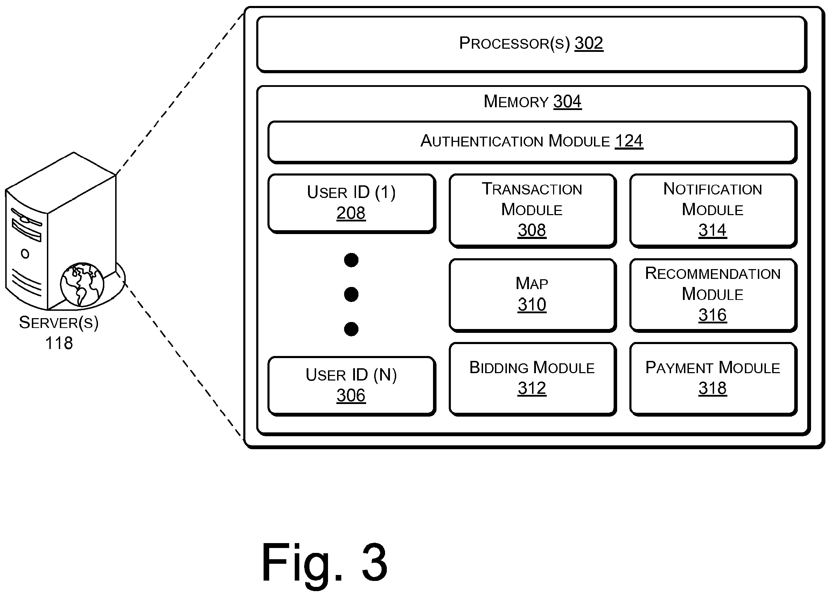

Fig. 3 is a schematic representation of the server(s) 118 of Fig. 1. The one or more servers 118 may be implemented as a single computing device, a server farm comprising multiple servers, a distributed network, a cloud-computing configuration, and/or the like. The server(s) 118 comprises one or more processors 302 and a memory 304. The memory 304 may contain the same user identifier (1) 208 associated with the mobile device 104 Fig. 2. In some implementations, memory 304 may contain thousands or even millions of separate user identifiers represented here as User ID (N) 306 where N is any number greater than one. Each user identifier may be associated with a respective mobile device.

The user identifier 208 represents a user 102 that is interacting with the server(s) 118 via a mobile device 104. The authentication module 124 determines if communications coming from the mobile device 104 should be associated with the user identifier 208. In some implementations, authorization may involve handshaking or other verification between, for example, the authentication module 124 of the server(s) 118 and the security module 214 of the mobile device 104. The authentication module 124 may similarly authenticate the identity of merchants 106/or online retailers 126. Providing robust data security may avoid fraudulent transactions from both mobile devices 104 and merchants 106.

The server(s) 118 may also include a transaction module 308. In some implementations, the transaction module 308 on the server(s) 118 is similar to the transaction module 212 on the mobile device 104. Transactions between the user 102 and the merchant 106 may be facilitated by either or both of the transaction modules 212 and 308 when a geolocation of the device matches or is within a threshold distance of a geolocation of the merchant. The transaction module 308 may be configured with APIs for exchanging information with both the merchant 106 and the mobile device 104. In some implementations, the APIs exposed to the merchant 106 may be regulated to prevent unauthorized merchants from access in the system and to improve data security. The APIs exposed to the mobile device 104 may be generic or customized to specific device hardware and operating systems. Providing multiple sets of APIs may allow the server(s) 118 to translate communications between mobile devices 104 and merchants 106 that would otherwise not be able to exchange information.

A map 310 stored on the server(s) 118 may contain geolocations of merchants 106. Correlation between a particular merchant 106 and a particular geolocation may be used to infer that a mobile device 104 is located at or near a merchant 106 because the mobile device is located at or near a geolocation associated with that merchant 106 in the map 310. The map 310 may also contain real-time information about the geolocations of each of the mobile devices 104 associated with the respective user identifiers 208-306. From this information it may be possible to determine how many mobile devices 104 that belong to the system are present at a given merchant location. It may also be possible to identify other mobile devices 104 in proximity to a given mobile device 104. For example, the map 310 may show that a user's friend (or at least the friend's mobile device) is at the merchant next door.

The server(s) 118 may also facilitate advertising via advertisements sent from or on behalf of the merchant 106 to the mobile device 104. In some instances, the bidding module 312 may receive and process bids for the privilege to place advertisements on mobile devices 104. Users 102 may opt in to receive advertising and be presented with relevant advertisements based on a geolocation of the mobile device 104 and user information 122. The bidding may be structured according to any known bidding system or otherwise. The operator of the server 118 may structure the bidding so as to maximize advertising revenue paid by the merchants 106.

The server(s) 118 may also include a notification module 314. In some implementations, the notification module 314 on the server(s) 118 provides a notification in the form of an e-mail, text, or similar message to the mobile device 104. The notification may be sent when there is a match between a good and/or service of interest to the user 102 and a good and/or service offered by a merchant 106 within a predetermined proximity of the geolocation of the mobile device 104. In some implementations, the notification module 314 may send a notification to the merchant 106 informing the merchant that a nearby user 102 may be interested in a good or service offered by the merchant 106.

A recommendation module 314 stored on the server(s) 118 may provide recommendations to the mobile device 104. The recommendations may suggest to the user 102 of the mobile device 104 nearby merchants 106 that sell a good or service in which the user 102 may have an interest. The recommendation module 314 may also identify nearby merchants 106 that offer a discount in the form of a coupon or such to the user 102. In some implementations, the recommendation module 314 may also recommend goods or services for sale by online retailers 128. The recommendation of an online retailer 128 may be provided together with recommendation for a nearby merchant 106. Depending on the goods and/or services sold by the merchant 106 and the online retailer 128, the relationship may be one of competition or collaboration. In a relationship deemed to be competitive, the recommendation module 316 may inform the user 102 that a nearby merchant 106 and an online retailer 128 both offer the same in good or service for sale. However, in a relationship deemed to be complementary, the online retailer 128 may offer something that is not available from the nearby merchant 106 but may enhance or complement a good or service sold by that merchant 106.

The server(s) 118 may also facilitate advertising via communications (e.g., notifications, recommendations, and the like) sent from or on behalf of the merchant 106 to the mobile device 104. For example, an entity that controls the server(s) 118 may generate revenue by charging merchants 106 and/or online retailers 128 for the privilege of being included in notifications sent from the notification module 314 and/or recommendations sent from the recommendation module 316. A payment module 318 in the server(s) 118 may receive and process payments from merchants 106 and/or online retailers 128. The payments may be in the form of a "virtual" currency or points that are accepted as payment by the entity that controls the server(s) 118 but are not a standard currency. Users 102 may opt in to receive notifications and recommendations provided by the server(s) 118. The payment received by the payment module 318 may be structured as a flat fee, a per unit fee, or determined by bidding between various merchants 106 and/or online retailers 128. The operator of the server 118 may structure the payment system so as to maximize revenue paid by the merchants 106 and/or online retailers 128.

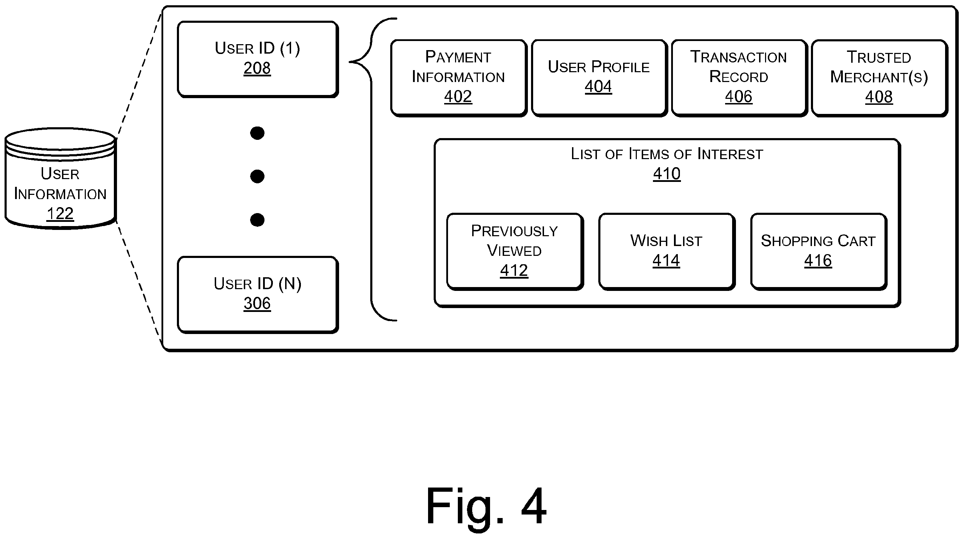

Fig. 4 is a data store including user information 122 that may be included within or connected to the server(s) 118. The user information 122 may contain some or all of the same information stored as user information 210 on the mobile device 104. In some implementations, the user information 122 stored on the server(s) 118 may be used to backup or restore the user information 210 on the mobile device 104 if, for example, the mobile device 104 is lost or damaged.

The user information 122 may provide separate data associated with each of the user identifiers 208-306 shown in Fig. 3. For example, User ID (1) 208 may be associated with payment information 402, a user profile 404, a transaction record 406, a list of trusted merchants 408, and a list of items of interest to the user 410. The payment information 402 may include such things as credit card or debit card numbers, bank account information, electronic payment system information, and/or the like. The user profile 404 may contain user preferences, lists of interests and hobbies, indications of which types of communications and/or transactions the user 102 has selected to receive, personal information such as preferences for a matchmaking service, and any other type of information associated with the user 102 and his or her User ID (1) 208. The transaction record 406 may contain a list of past transaction history comprising the identity of the seller (e.g., which merchant 106 or online retailer 128), time, geolocation, and subject of the transaction.

Out of all the merchants participating in the system the user 102 may select some subset of those merchants as trusted merchants 408. In some implementations, whenever a user conducts a transaction with a merchant the user may be asked if he or she wishes to add that merchant to the list of trusted merchants. This status as a trusted merchant may be part of the user information 122. The status as a trusted merchant may enable the merchant 106 to engage in transactions with the user 102 via the user's mobile device 104. The status as a trusted merchant may also decrease the amount of interaction required from the user 102 to complete electronic transaction using the mobile device 104 as compared with other merchants that are not included on the trusted merchant list. Within the list of trusted merchants 408 different merchants may be given different trust levels by the user 102. For example, transactions with the most trusted merchants may be completed automatically merely by the user 102 (and the mobile device 104) entering a location of the merchant 106.

For other merchants 106 with whom the user 102 does not desire such use of "zero-click" transactions, the user 102 may indicate a lower level of trust that requires some minimal interaction between the user 102 and the mobile device 104 in order to complete a transaction. This may be thought of as a "one-click" interaction, although the specific interaction may be something other than a "click." For other merchants that the user 102 associates with an even lower level of trust, the user 102 may require more than one click such as entry of a password and login before the mobile device 104 is enabled to complete a transaction with the merchant 106.

The list of items of interest to the user 410 may provide a list of goods and/or services that the user 102 might wish to purchase. The user's desires may be inferred from past activity by the user 102 in which he or she explicitly or implicitly indicated an interest in some good or service. For example, a list of previously viewed goods and/or services 412 may track those web pages or good/service descriptions that the user 102 has viewed previously in a web browser or another format. More definitive indications of the user's interest may be determined by reviewing the contents of a wish list 414 that the user 102 has generated himself or herself. The user 102 may establish a wish list on multiple online retailers 128, on another location such as a personal website, etc. and all of the different wish lists may be merged into the wish list 414 stored as part of the user information 120. An even stronger indication of what the user 102 is likely to buy may be determined by viewing the contents of an online shopping cart 416. The shopping cart 416 may represent those goods or services that the user 102 has begun, but not finished, purchasing from an online retailer 128. For some online retailers 128, a shopping cart may disappear if the user 102 does not complete the purchase within a fixed period of time, but for other online retailers 128 a virtual shopping cart may persist indefinitely. A user 102 could have multiple shopping carts at various online retailers 128 each containing one or more goods or services. The shopping cart 416 included in the user information 120 may represent an aggregation of the individual shopping carts from multiple different online retailers 128.

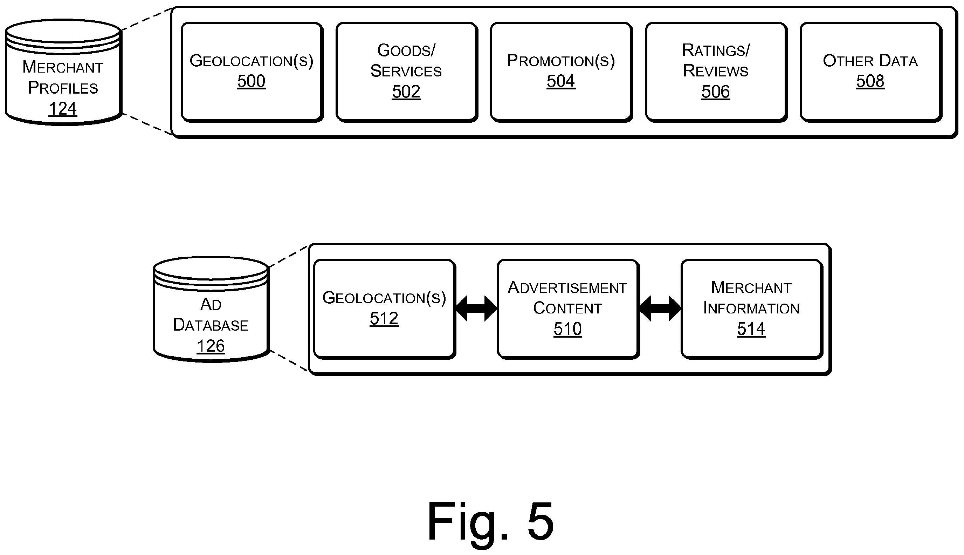

Fig. 5 shows multiple data stores including merchant profiles 124 and an advertisement database 126 that may be included within or connected to the server(s) 118. The merchant profiles 124 contain information about the merchants such as geolocations 500 of the merchants' brick-and-mortar locations, goods and/or services 502 offered for sale by the merchant 106, promotions 504 offered by the merchant, reviews and ratings of the merchant 506, and other data 508 about the merchant which may be used to facilitate transactions with mobile devices 104 (e.g., types of credit cards accepted). The geolocations 500 may be one source of data used to create the map 310 stored on the server(s) 118. The geolocations 500 may be one source of data used to determine whether a mobile device 104 is "near" or within a predetermined proximity of a merchant location. In some implementations, the geolocations 500 may be stored as coordinates such as latitude and longitude and compared with a coordinates of the mobile device 104 such as latitude and longitude determined by a GPS. The goods and/or services 502 available at the merchant 106 may be a real-time or near real-time list of inventory or the identified goods and/or services 502 may indicate things that the merchant 106 typically offers for sale without regard to current availability.

The promotions 504 may include things such as coupons or discounts for goods or services offered by the merchant. The promotions 504 may, for example, give a discount to a user 102 who has designated the merchant as a trusted merchant. The promotions 504 may also be usable at a different merchant. For example, a merchant may provide a coupon to a user 102 of a mobile device 104 when the user enters a competitor's store. As a further example, by logging in or checking in at a first merchant the user may receive a promotion that is redeemable at a second, different merchant. The first merchant may pay some or all of the costs associated with providing the promotion at the second merchant. The promotions 504 may, for example, give a discount to a user 102 based on the user information 120 for that user 102. For example, a merchant 106 may provide a coupon to a user 102 of a mobile device 104 for items that are included in a user's wish list 414. The coupons may provide a fixed discount or a percentage discount. For example, a coupon may provide the recipient with a fixed savings of $20 for any purchase of $50 or more. Alternatively, the coupon may provide a 50% off discount. Similarly, the coupon may provide for buy-one-get-one-free, buy-two-get-the-third-free, or similar types of discounts related to a number of items purchased.

The reviews and ratings 506 of the merchant may be provided by professional editors or reviewers or by voting or group rating from several users.

Communication between merchants and mobile devices 104 may also include advertising. The mobile device 104 may have a user interface with a designated window or advertisement box for displaying advertisements sent from merchants 106. The advertisement database 126 stores advertisement content 510 in association with geolocations 512 and merchant information 514. Because the advertisements are targeted for mobile devices 104 which may include a location sensor 234, the advertisement content 510 is associated with one or more geolocations 512 in order to provide location-relevant advertisements. For example, advertisements for a merchant may appear when the user 102 carrying the mobile device 104 approaches the geolocations of one of the merchant's retail stores. For instance, when a user approaches a coffee shop, that coffee shop may serve an advertisement or a promotion for a discounted cup of coffee when the user is near to or is within the coffee shop.

The advertisement content 510 may appear when the mobile device 104 is a predetermined distance from the merchant. In some implementations, the predetermined distance may depend upon a speed at which the mobile device 104 is traveling so that someone traveling in a moving car may receive the advertisement content 510 at a greater distance from the merchant then someone walking. In some implementations, the display of advertisements may be deactivated based on the speed at which the mobile device 104 is moving. This feature could prevent distractions to drivers by blocking advertisements, or at least placing the mobile device into a silent mode, when the speed of the mobile device 104 exceeds a speed threshold. The merchant information 514 may designate the merchant supplying the advertisement content 510. This may be used in conjunction with the user profile 404 of a user 102 to provide advertisements from merchants from which that user 102 has expressed an interest (explicitly or implicitly), while refraining from providing advertisements from other merchants. The merchant information 514 may also contain a bid amount indicating a maximum amount that the merchant is willing to bid in order to "win" and display their advertisement on the user's mobile device. This bid amount may be used by the bidding module 312 to determine which advertisement content 510 is displayed on a given mobile device 104.

### Illustrative Transactions between a Merchant and a Mobile Device

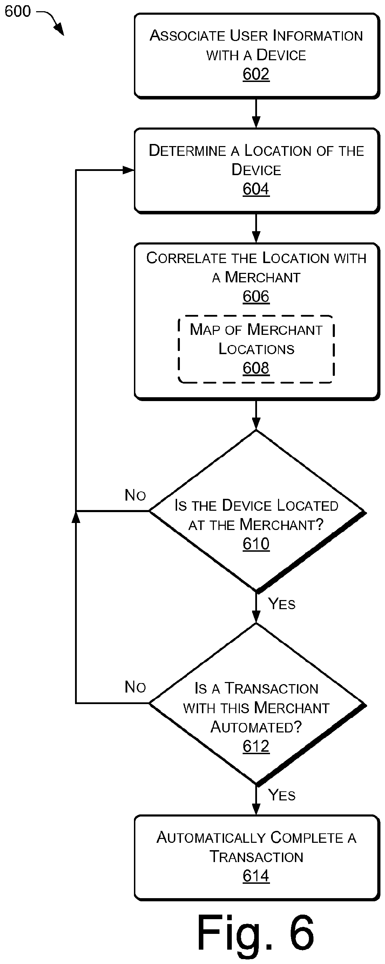

Fig. 6 illustrates a process 600 that includes associating, at operation 602, user information with a device. The user information may comprise, for instance, the user information 122 illustrated in Fig. 1. In some implementations, the device may be the mobile device 104 illustrative in Fig. 1. Associating user information with the device ties the identity of the user to the device and allows the device to represent the user in some electronic transactions. Next, at operation 604, the location of the device is determined. As described above, the location may be determined by a location sensor 230 that determines a geolocation as illustrated in Figs. 1 and 2.

Operation 606 then correlates the location with a merchant. The merchant may, for example, provide a wireless network connection inside or proximate to its premises and the connection may identity the merchant. By doing so, each device using that network connection may recognize its current location as being at the merchant. In some implementations, the device may additionally or alternatively be aware of an abstract location such as a latitude and longitude provided by GPS. A map of merchant locations 608 may be used to match the latitude and longitude of the device with a merchant location. There may be locations at which the geolocation of the device can be identified; however, that geolocation might not correlate with any merchant location. For example, the device may be on a street near to several merchants but not located at any of those merchants.

At decision point 610 it is determined if the device is located at the merchant. In some instances, this determination may include determining if the device is within the merchant, while in other instances this may include determining if the device is within a predetermined distance of the merchant. If not, process 600 follows the "no" path and returns to operation 604. This loop may repeat continually until the device is located at a merchant. When the device is located at a merchant, process 600 follows the "yes" path to decision point 612.

At decision point 612, it is determined if transactions with this merchant are automated. For example, the user may decide that he or she wants to complete certain types of transactions with certain types of merchants in an automated manner. In such situations, the user may activate an automatic transaction functionality of his or her mobile device. However, for other merchants, or for other types of transactions, the user may desire more interaction such as specifying the details of the transaction or affirmatively agreeing to the transaction. If this transaction with this merchant is not automated, process 600 follows the "no" path and returns to operation 604. If the transaction is automated then process 600 follows the "yes" path to operation 614.

At operation 614 a transaction between the user of the device and the merchant is completed automatically in some instances. This automatic completion of the transaction when the user is located at the merchant creates a friction-free experience for the user. The coupling of location awareness with a mobile computing device allows for zero-click transactions.

As one illustrative example, a user could associate her prepaid card (or other payment instrument) for the local coffee shop with a mobile device. The user could additionally set her favorite drink at this coffee shop as a tall latte. This information may be stored on the mobile device, such as user information 210, or somewhere on a network, such as user information 122. The local coffee shop may have many stores and each store location may be associated with unique latitude and longitude coordinates. When the user carrying her mobile device arrives at any of the store locations the device recognizes those coordinates as corresponding with the local coffee shop and implements a transaction specified by the user. In this example, the user can specify that the mobile device uses her prepaid card to purchase a tall latte whenever she enters one of the local coffee shop locations. The user can walk directly to the counter and pick up her tall latte without opening her wallet or even verbally placing an order. This is a friction-free transaction. This example may take several variations. For instance, the merchant may ask the user to show an identification of the user (e.g., a driver's license), to orally state a password associated with the user, or the like. Or, the user may receive a phone call or a text message and may confirm completion of the transaction via one of these communication channels.

As another illustrative example, the merchant may be an ambulance that is itself mobile with location awareness and ability to communicate with mobile devices. A portion of the user information 122 and/or 210 may contain medical information about the user. This information may be encoded, available only through predetermined APIs, or otherwise limited so that is only released to "merchants" that provide medical services such as the ambulance. When the geolocation of the ambulance and the geolocation of a mobile device are the same, the medical information from that mobile device may be automatically provided to medical service providers in the ambulance. That medical information could potentially contain a photo of the user so that the paramedics can confirm that the person actually in the ambulance is the correct user to associate with the medical information. This medical information may include, for instance, a medical history of the user, medications that the user is allergic to, and the like, thus allowing the paramedics to properly treat the user in the event of an emergency.

The mobile device 104 may also facilitate transactions with merchants even when the user 102 is not at or near the geolocation of the merchant 106. For example, some merchants such as an online dating/matchmaking service may not have a physical location of relevance to users. For this type of merchant, the point-of-sale device 110 may be a server itself or a component of the merchant server 108. In such cases, the user 102 may be at a geolocation associated with another merchant such as a restaurant, but interact with the online merchant.

In an online dating implementation, transactions may be dependent upon the geolocation of one user relative to another user rather than the geolocation of the user 102 with respect to the merchant 106. For example, members of the online dating service may choose to make the geolocations of their respective mobile devices available to a merchant server of the online dating service. The merchant server may determine if two mobile devices are within a threshold distance of each other and if the two users are determined to be a match by the dating service (e.g., a match may be defined at least in part upon user information 122 such as the user profile 404), a transaction may be initiated between one or both of the mobile devices and the online dating service. The transaction may comprise a notification of a "member match" to which one of the users may respond by requesting to contact the other user who is the "member match." The other user receiving the contact request may accept the contact request, decline the contact request, or ignore the contact request. If the contact request is accepted, the online dating service may allow mediated contact between the two users. In some implementations, direct contact information may be kept private so that communication between the two users must go through the online dating service (e.g., the merchant server of the online dating service).

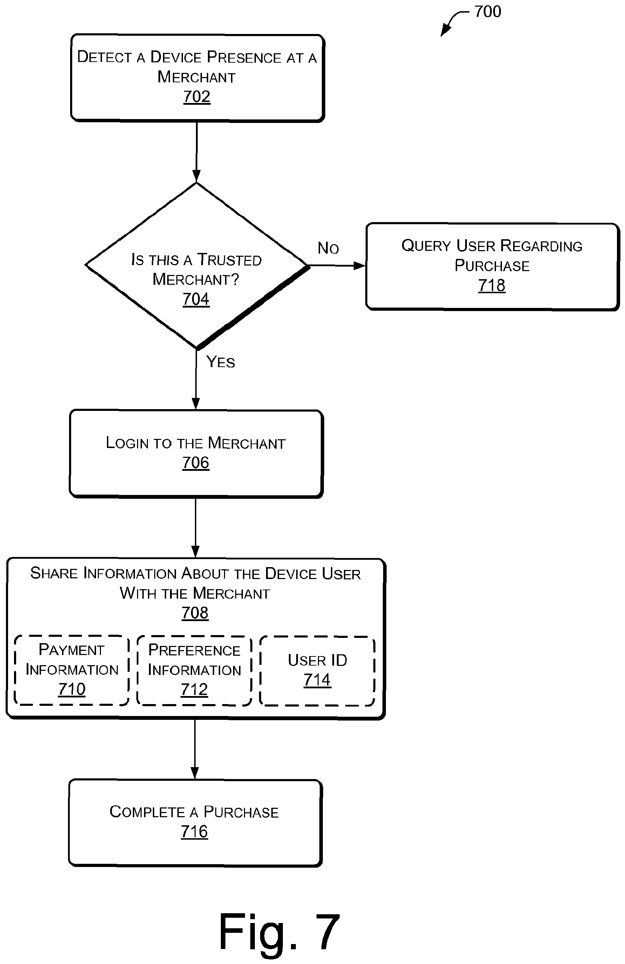

Fig. 7 illustrates process 700 that includes detecting a presence of a device at a merchant 702. The detection may be performed by the mobile device, the merchant, a network component, such as server(s) 118 illustrated in Fig. 1, or a combination thereof. For example, a distance of the mobile device from three cell phone towers may be used to triangulate a geolocation of the mobile device and that geolocation may be used to detect that the mobile device is present at the merchant. The designation of the device as present at the merchant may be context dependent (e.g. it may depend on a neighborhood density). For example, in a dense neighborhood with lots of shops directly adjacent to one another "presence" may be defined by a narrow spatial boundary and a requirement that the mobile device remain within that boundary for a period of time such as 30 seconds, 10 minutes, one hour, etc. The time requirement may prevent accidentally detecting the mobile device being "present" when in fact the user is merely passing by the merchant. In other contexts, for example a tollbooth on an empty highway, the mobile device may be designated as "present" at the tollbooth while still hundreds of yards away based on the speed and trajectory of the user device. This may allow the mobile device to pay the toll in time for the tollgate open without a vehicle approaching the tollbooth needing to substantially decrease speed.

At decision point 704, it is determined if the merchant is a trusted merchant for the user. The determination may be based in part on the list of trusted merchants 408 illustrated in Fig. 4. When the merchant is a trusted merchant, process 700 proceeds along the "yes" path to operation 706. At operation 706, the user device logs in to the merchant. The login may be completed using the user identifier 208 illustrated in Figs. 2, 3, and 4.

At operation 708, information about the device user is shared with the merchant. The information may include payment information 710, preference information 712, and a user identifier 714. In some implementations the user identifier 714 provided to the merchant in this operation may be the same user identifier 208 discussed above. In other implementations, the user identifier 714 in operation 708 may be different such as a unique user identifier 714 for this particular merchant, a "nickname" that is a proxy for the user identifier 714, or other identifier. Information may be shared with a point-of-sale device 110 of the merchant such as illustrated in Fig. 1. The preference information 712 may indicate what type of good or service the device user prefers to purchase. Returning to the coffee shop example, the preference information 712 may indicate that the user wishes to purchase a tall latte when at that coffee shop. In the tollbooth example, the preference information 712 may indicate that a user operates a motorcycle rather than a car, and thus, wishes to pay the appropriate toll for a motorcycle. In some implementations, the mobile device may simply provide the user identifier 714 to the merchant and merchant may retrieve other information linked to the user identifier 714 (e.g., payment information, preference information, etc.) from a communication network such as the network 116 illustrated in Fig. 1.

Next, at operation 716 the purchase between the user and the merchant is completed. The purchase may be completed using the payment information 402. It may also be completed using preference information 712, which in some implementations, may be used to automate the purchase so that the good or service indicated by the user preference information 712 is automatically purchased when the mobile device is detected at a merchant. In other implementations, completing the purchase at operation 716 may involve only a single interaction between the user and the mobile device. For example, the user may need to press a particular number on a numeric key pad or a soft key on a touch screen display of the mobile device. Additionally, the single interaction may comprise speaking into a microphone on the mobile device or shaking the mobile device to activate an accelerometer inside the mobile device. Some transactions, meanwhile, may involve multiple interactions.

If however, at decision point 704 the merchant is not recognized as a trusted merchant, process 700 proceeds along the "no" path to operation 718. At operation 718 the user is queried regarding if and how to proceed with a purchase at this merchant. For example, the user may decline to interact with this non-trusted merchant. Alternatively, the user may elect to login to the merchant even though it is not a trusted merchant and proceed to complete a purchase.

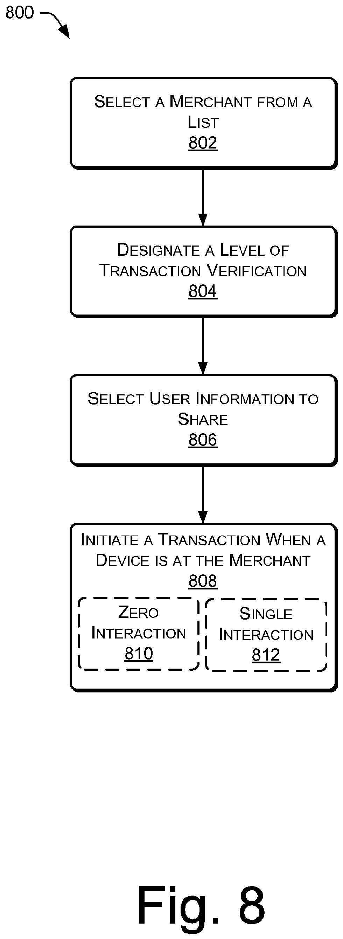

Fig. 8 illustrates process 800 for setting up a mobile device to interact with a merchant in the one or more of the manners described above. The user may select a merchant from a list of merchants at operation 802. The list of merchants may include merchants that choose to participate in this system of electronic commerce. This selection may be performed on the mobile device or on another computing device from which the list of selected merchants is then sent to the mobile computing device. At operation 804, a level of transaction verification is designated for one or more of the selected merchants. The level of transaction verification does not necessarily correspond to the trust levels discussed above. The user may designate certain merchants with whom he or she may complete transactions with a transaction verification (and, hence, with whom the user wishes to complete transactions automatically with zero interaction with his or her mobile device). Examples for which this level transaction verification may be suitable are coffee shops and tollbooths, among others. For other merchants the user may wish to take some affirmative step to verify the transaction and will therefore designate that a single interaction (or more) with the mobile device is to be used to verify the transaction. This may be desirable for trusted merchants that sell relatively expensive goods or services. For example, the user may wish to use his or her mobile device to pay for veterinary services, but does not want a $1,000 charge placed on to his or her account without at least a single interaction on the mobile device verifying that transaction. For other merchants, it may be possible to designate a level of transaction verification that requires more than a single interaction. This higher level of verification may be anything from pressing two keys on the mobile device to a complex login process that includes entering a password and providing payment information such as a card number.

At operation 806, user information to share with a merchant is selected. The user information may include any or all of the user information 122 shown in Fig. 1 and/or the user information 210 shown in Fig. 2. For example, sharing the user identifier 208 with the merchant will enable the merchant to recognize that mobile device by the user identifier 208. Additionally, the user may choose to share different information with different merchants. For example, credit card information may be shared with one merchant while bank account information is shared with a different merchant.

Next, at operation 808 a transaction is initiated between the merchant and the mobile device when the mobile device is at the merchant. The transaction may be verified according to the level of transaction verification indicated at operation 804. As discussed above, in some implementations, this may comprise zero interaction 810 and in other implementations this may comprise a single interaction 812 (or more) between the user and the mobile device. Setting up the mobile device in advance can establish default behavior when the mobile device is present at a merchant location. In some implementations, this setup information may expire after some length of time such as 24 hours. Upon expiration, the level of transaction verification may be reset to require a complete login for every merchant or in some implementations the number of interactions required may be raised incrementally (e.g., zero interaction merchants now require a single interaction, single interaction merchants now require at least two interactions with the mobile device, etc.). In other implementations, the setup information may not expire but rather persists until the user makes a change.

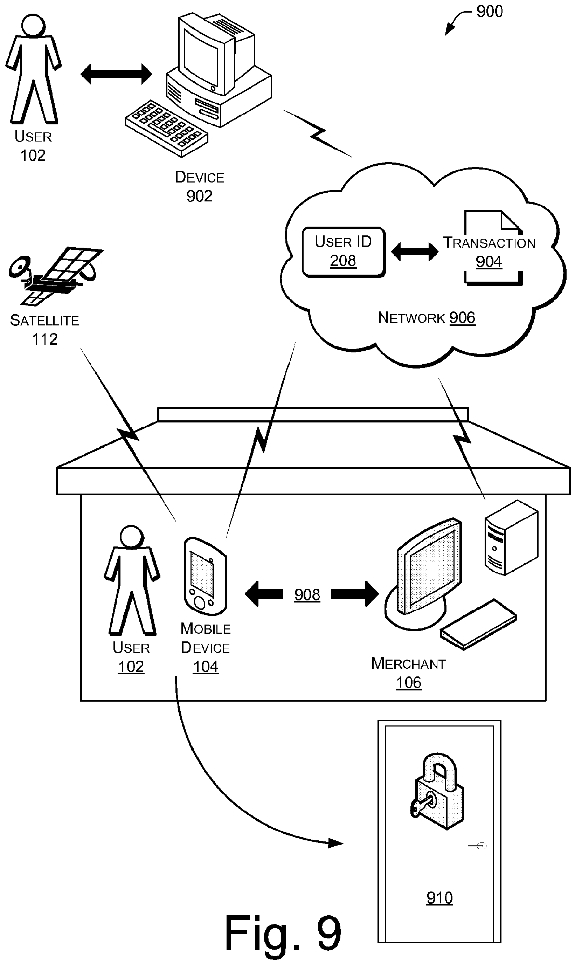

Fig. 9 shows an illustrative architecture 900 in which a representative user 102 employs a device 902 to initiate a transaction that will be completed when the user later arrives at the merchant 106. The processes shown previously in Figs. 6-8 are generally related to transactions that are initiated when the user 102 is at the same location as the merchant 106. The architecture 900, however, is additionally applicable in situations where the user 102 may initiate a transaction at one place and point in time and then later complete the transaction upon arrival at the merchant 106.

The user may initiate a transaction 904 through interaction with device 902. Device 902 may be the mobile device 104 or it may be a different computing or communication device such as a telephone, a desktop computer, laptop computer, thin client, set top box, game console, or the like. Device 902 may be connected directly or indirectly to a network 906. The network 906 may be the same network as network 116 illustrated in Fig. 1. A user identifier 208 is associated with the transaction 904. The user identifier 208 enables the merchant 106 to match transaction 904 with the correct user. Initiating that transaction may place that transaction in a transaction queue of the merchant 106. In some implementations this transaction queue may be maintained on the merchant server 108 illustrated in Fig. 1. The transaction queue could contain such things as a pre-order for a cup of coffee (to be delivered when the user arrives at the coffee shop) or a hotel reservation (to be confirmed with the user checks in to the hotel). Transactions may remain in the transaction queue for some period of time (e.g., minutes or days), but instantaneous, or nearly instantaneous, implementations are also possible.

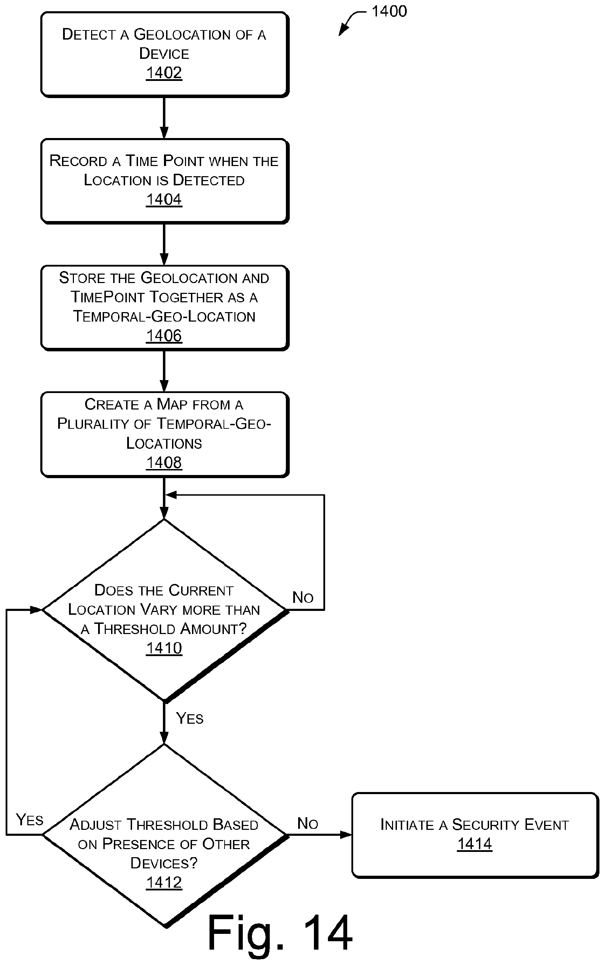

The user 102 later arrives at the merchant 106 with his or her mobile device 104. Recall that the mobile device 104 may also be associated with the user identifier 208 as illustrated in Fig. 2. In some implementations, a satellite 112 provides the mobile device 104 with a geolocation that can be compared with or matched to a geolocation of the merchant 106. When at the merchant's location the mobile device 104 and a computer system of the merchant 106 can communicate directly over a communication path 908 or indirectly via the network 906. The merchant 106 may access the network 906 to retrieve the transaction 904 when the mobile device 104 associated with user identifier 208 is present at the merchant location. Information provided by the merchant 106 to the mobile device 104 may be used by the user 102 to complete the transaction 904. In some implementations, completing the transaction may involve the user being charged and subsequently gaining access to a secure location 910. The secure location 910 may comprise a hotel room, an airplane, a person's home, a workplace, inside the borders of a country, or any other geolocation to which entry is regulated. Entry to the secure location 910 may be provided by a code personalized to the user 102. The personalized code may be stored in the user information 122. For example, the code may be a series of numbers and letters that the user 102 wishes to re-use whenever access requires entry of a code on a key pad or such. As a further example, the code may be based at least in part on biometric data from the user 102. Biometric data is discussed below in more detail in relation to Fig. 14. In some implementations, this code may be hidden from the merchant 106 so that the merchant 106 only receives the user identifier 208, but cannot access the user's personalized code.

For example, a user may make a hotel reservation from his home computer. The reservation along with his user identifier is transmitted across a communication network to the computer systems of the hotel. Some time (e.g., days) later when the user arrives at the hotel and his mobile device is detect at the geolocation of the hotel, the user identifier contained in his mobile device is used to retrieve the reservation. After confirming payment, such as by a credit card also linked to his user identifier, the hotel sends a text message or other communication to his mobile device that contains his room number. This may happen while he is walking through the lobby to the elevators without ever stopping at the front desk. Once at his room, the presence of his mobile device outside the door may be detected by a wireless communication network in the hotel and the door may be automatically unlocked. Room keys may be provided inside the hotel room. In implementations in which the user identifier is also linked to a user profile (and the user has elected to share his user profile with the hotel), the user profile may be used to customize his guest experience at the hotel by, for example, instructing the hotel staff to place his favor type chocolate on the pillow. Similar to the purchase of goods, the system can provide a friction-free experience for the purchase of services.

As a further example, the architecture and systems described herein can be applied to immigration and border security. In this context, the transaction 904 may be the granting of entry to a country. Initially, the person wishing to travel to a different country may enter user information about the potential trip into a computing device 902 and associate that information with the transaction 904 as well as a user identifier 208 for the potential traveler. In some implementations, a passport number could be used as the user identifier 208. Upon arrival at immigration in the destination country, mobile device 104 carried by the traveler may signal to the immigration authority that this person has arrived and is requesting entry. In some implementations, the user identifier 208 may be associated with a mobile device 104, such as a mobile phone, that the user 102 is instructed to bring when they travel to the other country. In other implementations, the mobile device 104 may be a miniaturized electronic device that is attached to the user's passport as an entry visa. In yet other implementations, the passport itself may comprise the mobile device 104 and an RFID in the passport may be the user identifier 208. This system may reduce the friction associated with processing people entering a country by allowing the immigration transaction to be partially completed in advance and by automatically identifying the people and the corresponding information when they are located at an entry point.

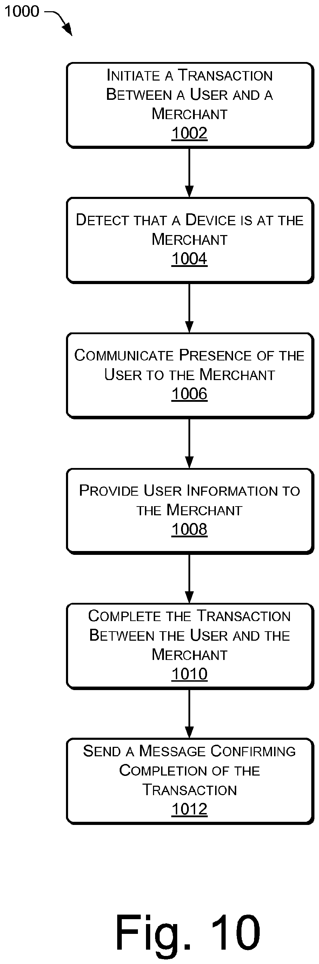

Fig. 10 illustrates a process 1000 for completing a transaction between a user and a merchant when the user arrives at a geolocation of the merchant. At operation 1002, a transaction is initiated between the user and the merchant. Initiation of the transaction may be separated in space and in time from completion of the transaction; however, such separation is not necessary.

Upon arrival at the merchant's geolocation, the mobile device is detected at the merchant in operation 1004. The detection may be direct such as implementations in which a signal broadcast by the mobile device is picked up by a receiver at the merchant. Alternatively, the detection by be indirect or inferred by correlating a current geolocation of the mobile device with a geolocation of the merchant. At operation 1006, the presence of the user is communicated to the merchant. The communication may trigger the merchant to access the transaction.

User information may be provided to the merchant at operation 1008. The user information may be provided directly from the memory of the mobile device or a user identifier associated with the mobile device may be used to retrieve user information from a network or other remote data source. As discussed earlier, the user information may include payment information, a user profile, and the like. The user profile may include user preferences that the merchant uses to modify the transaction. User preferences may include such things as window or aisle seat on an airplane, smoking or non-smoking rooms in a hotel, and the like. Next, at operation 1010, the transaction between the user and the merchant is completed. Completion may include collecting a payment, confirming a reservation, making a purchase, etc.

Following completion of the transaction, at operation 1012, the merchant may send a message to the mobile device confirming completion of the transaction. The message may be a receipt for the transaction, or in some implementations, it may be a code or other information that is necessary to access a secure location such as a hotel room or an airplane. For example, the message may comprise a boarding pass barcode that can be displayed on a screen of the mobile device and scanned by conventional equipment when the user boards an airplane. In other implementations, the message may be an electronic token that provides additional functionality to the mobile device. For example, the electronic token may allow the mobile device to broadcast a signal (e.g., analogous to a garage-door opener) that may be used to open a door and gain access to the secure location.

### Illustrative Parent and Child Devices

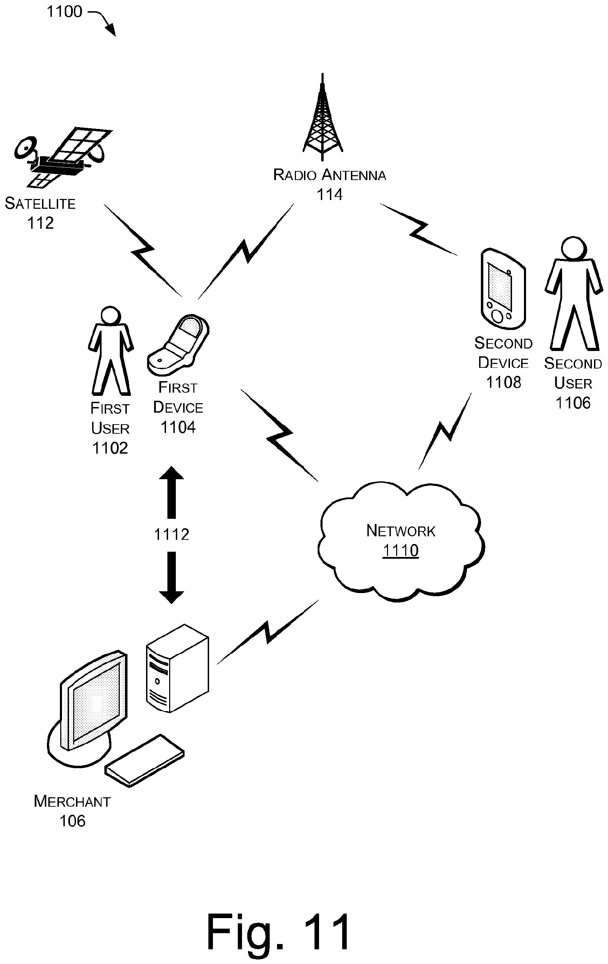

Fig. 11 shows an illustrative architecture 1100 in which a two devices having a parent-child relationship interact to complete a transaction with a merchant. While this example describes the techniques in the parent/child context, these techniques may similarly apply for employer/employee contexts, teacher/student contexts, adult child/senior parent, and/or any other context. This relationship may be generally thought of as a master-slave relationship between computing devices. The child 1102 is a user of a child device 1104. The child device 1104 may be associated with a given user (i.e., the child 1102) based on a login or authentication of the user on the child device 1104. In some implementations, the login may be tied to the user information 122 of the child 1104 thus providing the same features, and parentally imposed limitations, on any device that the child 1102 uses. The child device 1104 may be a mobile device similar to the device 104 illustrated in Fig. 1. In some implementations, the child device 1104 may be designed with a simple user interface, limited features, large buttons, bright colors, and/or otherwise adapted for a younger user. A parent 1106 interacts with a parent device 1108. The parent 1106 and the parent device 1108 may be similar to the user 102 and the mobile device 104 illustrated in Fig. 1. However, the parent device 1108 may be a non-mobile device, such as a desktop computer. Although designated herein as a "parent" and a "child" the two users may have a relationship other than a parent-child relationship, as discussed above. However, as will be described in more detail below the parent device 1108 may have limited control and/or supervision functionality with respect to the child device 1104. This hierarchical relationship between the two devices could be implemented in an employment context as well as a family context.

The satellite 112 and the radio antenna 114 are the same as shown in Fig. 1. The child device 1104 is aware of its geolocation, or another entity is able to track this geolocation. The geolocation information may be provided by the satellite 112, the radio antenna 114, and/or alternative sources as discussed above. The child device 1104 and the parent device 1108 share at least one communicative connection. In some implementations, such as mobile phones, the two devices may communicate via the radio antenna 114. In the same or different implementations, the two devices may have a connection to a network 1110 such as the Internet. The network 1110 may be the same as the network 116 shown in Fig. 1. In other implementations, it may be a different network such as a subset of the network 116 restricted to only content and connections that are deemed suitable for a child.

The merchant 106 may also have a connection to the network 1110 over which information may be shared with either the child device 1104 or the parent device 1108. The child device 1104 may communicate with the merchant 106 across the network 1110 and/or communicate directly with the merchant 106 over a direct communication link 1112. The direct communication link 1112 may be similar to the direct communications link 120 illustrated in Fig. 1.

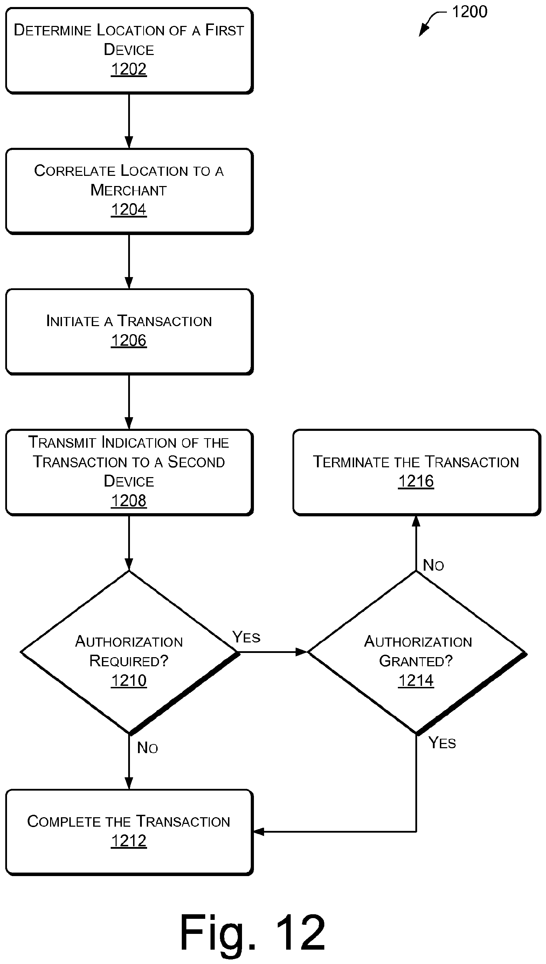

Fig. 12 illustrates process 1200 for completing a transaction between a child device and a merchant and transmitting an indication of the transaction to the parent device. At operation 1202, a geolocation of the child device is determined. The geolocation of the child device may be determined in reference to the satellite 112 or radio antenna 114 shown in Fig. 10. Next, at operation 1204 the geolocation of the child device is correlated to a merchant. Correlation may be accomplished through any of the mechanisms discussed above such as, for example, comparing the geolocation of the child device to a map of merchant locations. At operation 1206, a transaction is initiated between the user of the child device and the merchant. The transaction may be initiated automatically in some implementations, or in other implementations the transaction may involve one or more inputs from the user of the child device before initiation.

An indication of the transaction is transmitted to a parent device at operation 1208. The indication may inform the user of the parent device about the details of the transaction between the child device and the merchant. In some implementations, the indication may be provided in real-time to the parent device. A record or log of transactions of the child device may be maintained for access by the user of the parent device. The log may store any combination of transactions initiated, completed, and/or denied. In some implementations the log may be similar to the transaction record 406 illustrated in Fig. 4. The log may be stored in association with the user identifier of either the parent or the child. Depending on the level of control for parent wishes to exercise over transactions made by child, parental authorization from the parent device to the child device may be necessary to complete the transaction. A requirement for parental authorization may depend on the nature of a transaction. For example, a parent may configure the system to allow the child to purchase books without parental authorization, but to require parental authorization for purchases of candy. Additionally, or alternatively, the requirement for parental authorization may depend of a value of the transaction (i.e., dollar value), a geolocation of the child device, and/or other factors. In one implementation, the parent may provide the child with a budget (in terms of money or other metric) and when the child is under budget authorization may not be required, but authorization may be required for transactions that exceed the budget. In situations for which parental authorization is required, the indication may include a request that the parent respond by either authorizing or denying the transaction.

At decision point 1210, is determined whether or not parental authorization is required. When parental authorization is not required, process 1200 proceeds along the "no" path to operation 1212. At operation 1212, the transaction between the child device and the merchant is completed. In some implementations, the transaction may be completed based in part upon a user profile associated with the child. Furthermore, in the same or different implementations, a user profile associated with the parent may also affect how the transaction is completed. For example, if the child has indicated that he or she wishes to automatically a purchase particular candy upon entering a candy store, that portion of the child's user profile may be used to complete a purchase of that type of candy. The user profile associated with the parent may be used for, among other things, a source of payment information to complete the candy purchase.

When parental authorization is required, the process 1200 proceeds from decision point 1210 along the "yes" path to decision point 1214. At decision point 1214, it is determined whether or not the parental authorization has been granted. When parental authorization is granted, for example by the parent interacting with the parent device, process 1200 proceeds along the "yes" path to operation 1212 and the transaction is completed. However, when authorization is denied the process 1200 proceeds along the "no" path to operation 1216 and the transaction is terminated. Termination of the transaction may result in a message being sent to the child device and/or the merchant.

### Security for Mobile Devices

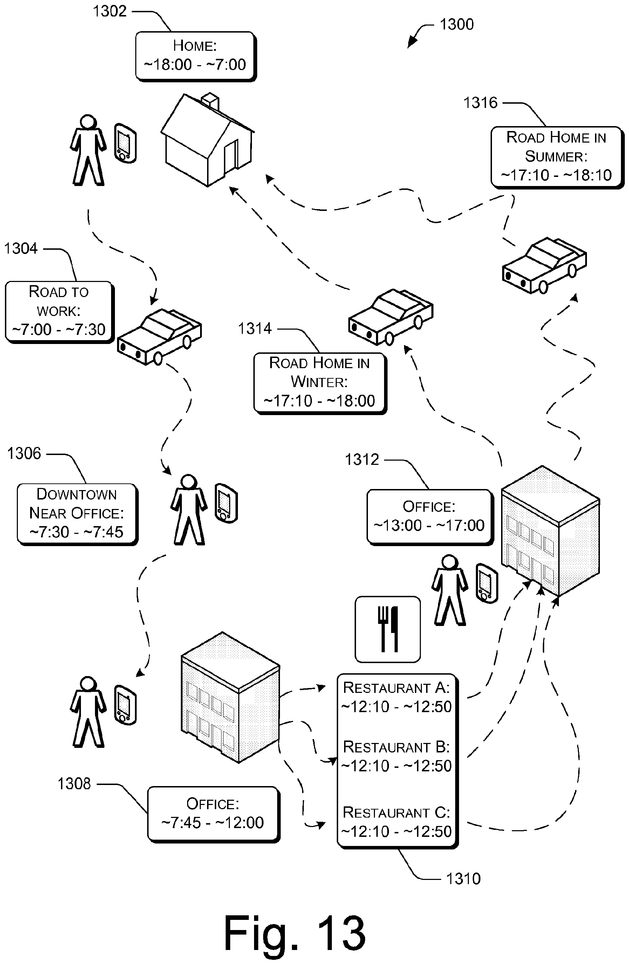

Fig. 13 shows an illustrative map 1300 of temporal-geo-locations of a mobile device during a workday of a user of the mobile device. By creating a map of where the device is typically located and when the device is at those locations, variance from those patterns can serve as a trigger to suggest that the device may have been stolen or misplaced and initiate a security event such as shutting down the device or requiring a password to complete purchases with the device. This type of security feature may be implemented automatically by the device itself before the user is even aware that a problem exists. The mobile device may include a security module 214 as illustrated in Fig. 2 for implementing these security features.

The user may begin his workday at his home which has a fixed geolocation. Typically he-specifically his mobile device-may be at home from approximately 6:00 PM until approximately 7:00 AM and this comprises a first temporal-geo-location 1302 for his workday. Commuting from home to work may involve driving along the road to work between approximately 7:00 AM to approximately 7:30 AM. His automobile may include an additional device, such as an on-board navigation system, that is also associated with his user identifier 208, and thus, also contributes to building a map of temporal-geo-locations for the user. He may use the same route every day in commuting to work so the systems of the user device may recognize this temporal-geo-location 1304 even though it is not a single fixed position but rather a series of geolocations and a series of time points. After arriving downtown, the user's day may include another temporal-geo-location 1308 that comprises his walk from a parking area to his office between approximately 7:30 AM and approximately 7:45 AM. While at the office the user and the user device may move around within the office but remain at the geolocation of the office from about 7:45 AM to about 12:00 PM. This is another temporal-geo-location 1310.

Up until lunchtime this user's typical weekday schedule may be fairly consistent. However, during lunch he may move to a variety of geolocations associated with various restaurants shown here as Restaurant A, Restaurant B, and Restaurant C. The user may generally be inside one of the restaurants from approximately 12:10 PM to approximately 12:50 PM. This temporal-geo-location 1312 may have a well-defined time but a loosely defined location. For example, any geolocation within a 10 minute walk of the office may be deemed part of this user's typical weekday movements during the lunch hour. After lunch the user may return to the office. The office is at the same geolocation it was during the morning, but the time period is different so being in the office from about 1:00 PM until about 5:00 PM creates yet another temporal-geo-location 1314 in the map of this user's workday.

The user may have more than one route he takes home from work. During the winter, for example, the user may take a more direct road home leaving office at about 5:10 PM and arriving home at about 6:00 PM. This creates a temporal-geo-location 1314 across a range of space and time similar to the temporal-geo-location 1304 representing the road to work. In the summer, this user may take the scenic route home. The road home in summer may have a different geolocation in all or in part from the road home in winter. The road home in summer may also take longer so that while the user leaves the office at 5:10 PM he does not arrive home until 6:10 PM. This creates an alternate temporal-geo-location 1316 to the temporal-geolocation 1314 representing the road home in winter. Depending on the security settings of the mobile device, the mobile device may not trigger a security event no matter which route the user takes home even if he uses the winter road during the middle of summer. Alternatively, if stricter security settings are applied then taking the summer road during midwinter may trigger security event, but during mid-March the mobile device may tolerate the user taking either road without triggering a security event.

By recording times, dates, and geolocations as the mobile device is used and moved it is possible for a security system, for example security module 214, to learn what are typical movements through space and time. This "geolocation signature" of the user can be stored in a data file as a series of time-location data points. Some or all of these data points may be layered together to create a multidimensional map containing past geolocation and time information for the mobile device.

Fig. 14 illustrates process 1400 for securing a mobile device based on variance from a map of temporal-geo-locations. At operation 1402, a geolocation of the mobile device is detected. At operation 1404, a time point when the geolocation is detected is recorded. Next at operation 1406, the geolocation is stored in association with the time point at which the geolocation was detected. This combination of geolocation and a time point is a temporal-geolocation. Temporal-geo-location data points may be recorded with varying levels of granularity based on things such as a memory capacity of the mobile device 104, velocity at which the mobile device 104 is traveling, and the like. Granularity of recording temporal-geo-location data points may occur with a regular frequency such as every 30 seconds or every 10 minutes. In some implementations this data may be stored in the memory 204 of the mobile device 104 shown in Fig. 2. The temporal-geo-location data may be stored, among other places, as user information 210 or in the security module 214 also shown above in Fig. 2.

A map is created from movements of the mobile device over time based on a plurality of the temporal-geo-locations at operation 1408. As indicated above, this may be a multidimensional map comprising a latitude dimension, a longitude dimension, a time dimension, and a date dimension. Including additional and/or alternate dimensions in the map is also possible. This map may become more detailed, and potentially more useful, as a greater amount of data is accumulated. For example, when a user initially purchases a mobile device it may not be possible for the mobile device to detect whether or not it has moved away from the user's "regular" temporal-geo map. If the user knows that he or she will be moving in ways that are atypical (i.e., "going off the map"), the user may manually turn off the recording of temporal-geo-location data points. This may prevent inclusion of data into the map that would degrade rather than improve the accuracy of the map.

In order to detect whether or not the mobile device has been stolen, misplaced, or is otherwise in the wrong place at the wrong time, decision point 1410 may compare the current temporal-geo-location of the mobile device with the map and determine whether or not the current temporal-geo-location varies more than a threshold amount from the map. In some implementations, this comparison may be achieved at least in part through the use of artificial intelligence, heuristics, or fuzzy logic. In some implementations, the threshold may be configurable by the user of the mobile device. The analysis may also draw upon calendar or scheduling information of the user to see if the user has a scheduled trip that varies from his regular map. The calendar information may be included in the user information 210 and provided to the security module 214.

When an amount of variance is less than the threshold amount, process 1400 proceeds along the "no" path and returns to decision point 1410 to once again query whether or not the mobile device has varied too far from the map. This loop may be repeated continuously, periodically, or randomly. The frequency of repeating this loop may be based in part upon processor power of the mobile device 104, a velocity at which the mobile device 104 is moving, and/or other factors. For example, the frequency of performing the analysis at decision point 1410 may be lower when the mobile device 104 is moving at a walking pace and the frequency may be higher when the mobile device 104 is moving at a highway speed (.e.g., while in a car).

The threshold amount may also be based at least in part on the presence of other mobile devices in the same geolocation or near to the mobile device. For example, a user may vary from his or her established map during a vacation. However, during the vacation the user may travel with his or her family members who may have their own mobile devices. In one implementation, the mobile devices of the family members (or, as a further example, coworkers) may be associated with each other. One type of association is the parent-child relationship illustrated in Fig. 8 above. The presence of these other mobile devices may be used to adjust the threshold. The absence of other devices may also be used to adjust the threshold. If, for example, the mobile device is rarely found in a particular geolocation unless other mobile devices are nearby, then the absence of those devices may be a variance from the user's map. For example, the mobile device associated with a parent may occasionally be located at a soccer field on evenings during which a child is playing soccer. However, on those evenings the child's mobile device is also at the soccer field. If, for example, the user forgot her mobile device at the soccer field a security event might be triggered once the child's mobile device leaves the geolocation of the soccer field. Presence or absence of other mobile devices may comprise an additional dimension of the temporal-geo-location map.

Returning to process 1400, when the current temporal-geo-location varies more than a threshold amount, process 1400 proceeds along the "yes" path to decision point 1412. At decision point 1412 the threshold may be adjusted based on the presence of other mobile devices in the same geolocation as the mobile device. When the threshold is adjusted, process 1400 proceeds along the "yes" path and returns to decision point 1410 to reevaluate based on the adjusted threshold. When the threshold amount of variance is not adjusted, process 1400 proceeds along the "no" path to operation 1414 and initiates a security event. The security event may comprise shutting down the mobile device, initiating an automatic phone call or text message to another device that includes the current location of the mobile device, requiring input of a password before the mobile device can be used, and the like. The user 102 may manually turn off the security events if, for example, the user 102 is travelling to a new place (or travelling at a new time) and wishes to avoid "false positive" security events.

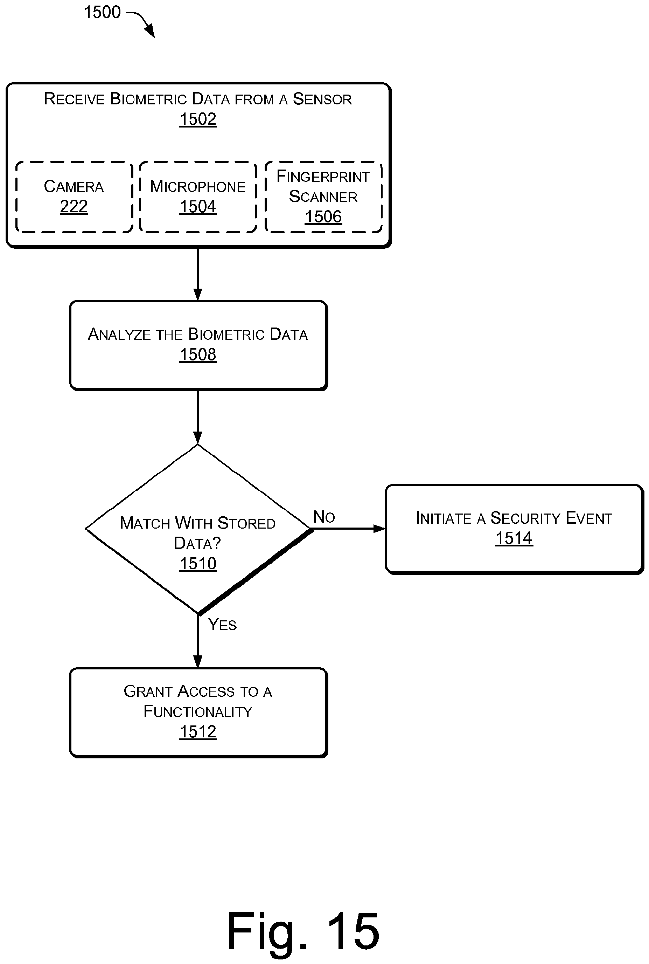

Fig. 15 illustrates process 1500 for securing a device based on biometric data. Providing security based at least in part on biometric data can minimize opportunities for someone other than a legitimate user of a mobile device to misuse the mobile device by, for example, making unauthorized transactions with merchants. In order to balance between providing the zero-interaction transaction experience and validating the user's identity, biometric data may be solicited periodically such as once per hour or once per day (or at any periodic or random time) in order to continue using the zero-interaction transaction feature. Alternatively, in implementations in which the user makes transactions with a single interaction, entering biometric data may comprise that single interaction.

At operation 1502, biometric data is received from a sensor of the mobile device. Many mobile devices, such as the mobile device 104 illustrated in Fig. 2, are equipped with input devices that may be used for multiple purposes including receiving biometric data. For example, the mobile device 104 may include a camera 222. The mobile device may also include a microphone 1504. In other implementations, the input device that collects biometric data may be used specifically for collecting biometric data such as a fingerprint scanner 1506. Other types of general purpose input devices used to collect biometric data and/or special-purpose biometric data input devices are also envisioned within the scope of this disclosure.

Next at operation 1508, the biometric data is analyzed. In some implementations, the biometric data may be analyzed by a processor and software present on the mobile device itself. This implementation may allow the mobile device to offer stand-alone confirmation of a user's identity without a need to access a network or other computing device. In other implementations, the biometric data may be sent from the mobile device to another computing device for analysis. This implementation may allow more sophisticated and computationally intensive techniques for analyzing biometric data than could be readily implemented on a mobile and potentially low-power device. Analysis of the biometric data may convert analog input into digital data or convert a complex set of data such as a fingerprint into a relatively simple string of data like a hash code. The analysis of the biometric data may be matched to the type of data received. For example, if the camera 222 is used to collect biometric data by taking a picture of a person's face, that picture may be analyzed using facial recognition techniques. Alternatively, if the microphone 1504 is used to record a sample of a voice, then that data may be analyzed by using voice recognition techniques. For added levels of security, multiple types of biometric data may be used together such as, for example, taking a picture of a person's face and recording that person's voice then analyzing both sets of biometric data.

At decision point 1510, a determination is made as to whether the analysis of the input of biometric data matches stored biometric data associated with the mobile device. For example, the hash code generated from a fingerprint scan could be compared to a stored hash code that the user entered while she was setting up the mobile device. In some implementations, the stored biometric data which is used for comparison is stored locally on the mobile device. The biometric data may be stored, for example, as part of the user information 210 shown in Fig 2. Again, this may allow the mobile device to provide stand-alone analysis. In other implementations, the stored biometric data may be stored remote from the mobile device, for example, as a part of the user profile 404 illustrated in Fig. 4. Storing the biometric data remotely may conserve memory space on the mobile device and may provide greater security by preventing an unauthorized person from extracting biometric data from a lost or stolen mobile device.

When the analysis of the biometric data matches the stored biometric data, process 1500 proceeds along the "yes" path and grants access to a functionality of the mobile device at operation 1512. The functionality may comprise any type of operation feature, data, and the like available on or implemented by the mobile device. For example, the ability to initiate and complete a transaction with a merchant is one type of functionality. The ability to make phone calls is a type of functionality on mobile telephone devices. Associating a particular mobile device with an individual user's identity is another type of functionality. For example, a network server such as the server(s) 118 illustrated in Fig. 3 may associate a user ID (1) 208 stored on a network with a serial number of the mobile device based at least in part upon a login that uses biometric data. In this implementation, the user could interact with multiple mobile devices, yet have each device tied to his or her unique user identifier 208 and other things which are linked to that user identifier 208 such as the payment information 402, user profile 404, and a list of trusted merchant(s) 408 as shown in Fig. 4.

If, at decision point 1510 it is determined that the analyzed biometric data does not match the stored biometric data, process 1500 may proceed along the "no" path and initiate a security event at operation 1514. The security event may be anything from shutdown and complete deletion of all stored data on the mobile device to a warning message displayed on the mobile device. In some implementations, the security event may limit functionalities of the mobile device, such as to those functionality that do not incur additional charges. Other types of security events may include sending an e-mail or making a phone call that communicates the current location of the mobile device. The security event at operation 1514 may be the same or different than the security event triggered at operation 1414 illustrated in Fig. 14.

Security events may be triggered by other mechanisms besides variance from a temporal-geo-location map or failure of a biometric login. In some implementations, the user may be able to manually initiate a security event remotely from the mobile device. Some mechanisms of achieving this include calling a phone number, sending an e-mail, entering a command from a webpage, or the like. The web page may be a security web page for that mobile device that shows a current geolocation of the mobile devices as well as past transaction data and the like. For example, if the user suspects that his or her mobile device was lost or stolen that user could call a certain phone number, enter a code, and then a signal would be sent over a network and broadcast to the mobile device causing the mobile device to temporarily shut down. In other implementation, different triggers may be used to initiate a security event. Some of those triggers include financial transactions, for example, sending out an alert message when a large purchase is initiated using the mobile device.

### Advertising and Promotions

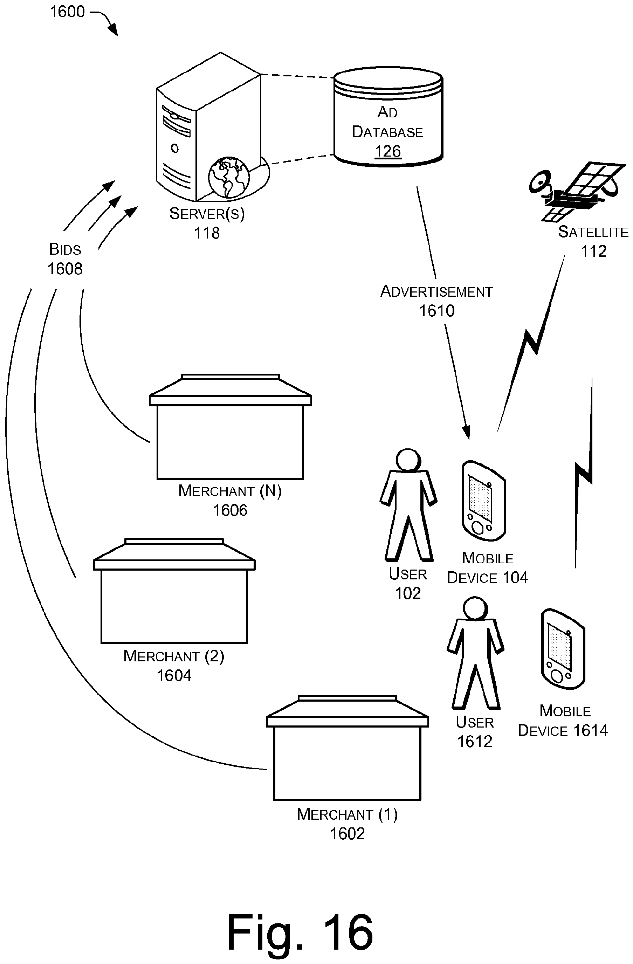

Fig. 16 shows an illustrative architecture 1600 for providing merchant advertisements or promotions to mobile devices at or near the merchant. Mobile devices that provide the features for mobile electronic commerce described above may also be desirable targets for merchants to advertise on in order to drive that mobile electronic commerce. In the architecture 1600, a plurality of merchants is illustrated as merchant (1) 1602, merchant (2) 1604, and merchant (N) 1606 where N may be any number greater than two. The merchants may submit bids 1608 to the server(s) 118. The bids 1608 may indicate an amount of money that the respective merchants are willing to pay to have an advertisement 1610 sent to a mobile device. The advertisements 1610 may be supplied by an advertisement database 126 as illustrated in Fig. 5.

One user 102 and one mobile device 104 receiving the advertisements 1610 may be the same as illustrated in Fig. 1. There may be other users 1612 each having a respective mobile device 1614. Although only two users and only two mobile devices are illustrated in Fig. 16, it is to be understood that any number of users and mobile devices may exist in this architecture and may be appropriate recipients for an advertisement 1610.

Each of the mobile devices 104 and 1614 may receive geolocation information from a satellite 112 or other source. The respective mobile devices 104 and 1614 may receive geolocation information from different sources (e.g., a radio antenna for one mobile device and a WiFi hotspot for the other mobile device). The geolocation of the mobile devices 104 and 1614 may be matched with geolocation(s) 512 associated with advertisement content 510 as illustrated in Fig 5. This may provide location-relevant advertising to the mobile devices 104 and 1614.

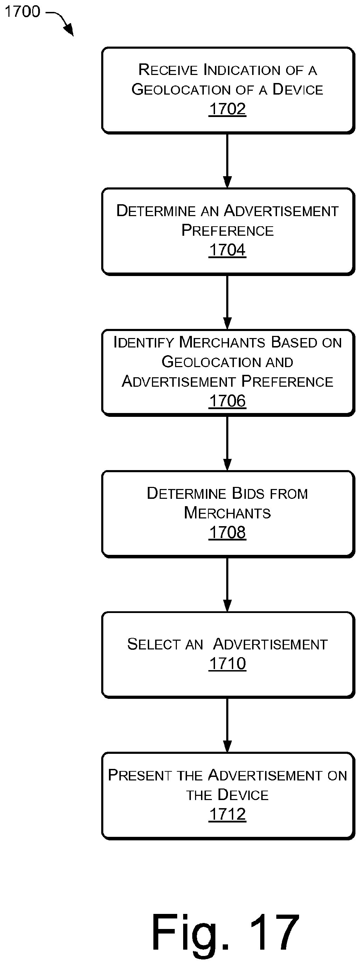

Fig. 17 illustrates process 1700 for presenting advertisements on a device based on bids submitted by merchants. At operation 1702, an indication of a geolocation of a mobile device is received. The geolocation may be determined in reference to the satellite 112 illustrated in Fig. 16. At operation 1704, an advertisement preference of a user of the mobile device is determined. The system may be configured so that a user receives no advertisements unless a user affirmatively opts in to receive advertisements. The user preference information may be part of a user profile such as user profile 404 illustrated in Fig. 4. The advertisement preference may also specify which categories of advertisements and from which merchants the user is willing to receive advertisements. In some implementations, a list of trusted merchant(s) 408 may determine the merchants that are able to send advertisements to the user. The advertising preferences may comprise any other type of user information. For example, the user information may include information about past transactions between the user and the merchant. This may be used to create targeted advertisements, for example, by telling the user about items that he or she purchased in the past and may wish to purchase again (e.g., tall latte) or about related items that the user may also wish to purchase (e.g., you purchased a chili dog for lunch, would you like to purchase antacids at our nearby drugstore?).

Next, at operation 1706, merchants are identified based on the geolocation of the mobile device and on the advertisement preference of the user. The identified merchants may include only merchants within a specified distance from the mobile device. This can limit the possible source of advertisements to only those merchants that are located proximate to the geolocation of the mobile device. For example, if the user is walking down a street lined with restaurants, restaurants along that street may be eligible to advertise on the mobile device but restaurants located across town would not. A threshold or radius within which merchants are identified as being proximate to the mobile device may vary based on the type of advertisement. For example, restaurant advertisements may only be sent to mobile devices that are within a quarter mile of the restaurant geolocation. However, hotel advertisements may be sent to users with mobile devices within five miles of the hotel geolocation. Additionally, the advertisements may be sorted by time such that restaurant advertisements may be more common or cover a larger geographic area in the hours before dinner time and hotel advertisements may cover a larger geographic area earlier in the day but progressively narrow the geographic focus as it becomes night.

Once a pool of merchants has been identified based on at least geolocation and advertisement preference, bids are received from those merchants at operation 1708. The bids may be received and processed by the bidding module 312 illustrated in Fig. 3. Each of the bids may include different factors that the merchant is bidding on as well as a maximum bid price, a range of bid prices, or other bidding characteristics. For example, a merchant may bid a higher amount to place advertisements on the mobile device of a user who has made purchases from that merchant in the past. As a further example, the merchant may bid more to place advertisements on mobile devices that are nearer to the merchant and bid less to place advertisements on mobile devices that are farther away from the merchant.

At operation 1710, an advertisement is selected. The selected advertisement may be determined based on the bid price, the user preferences, and other factors such as, for example, whether the merchant has enough money in an advertising account to pay the bid price. In some implementations, a winning bid that determines the selected advertisement may be the bid associated with a largest amount of money. Other bidding or auction arrangements are also possible such as, for example, the highest bidder paying an amount bid by the second highest bidder.

Next, at operation 1712, the selected advertisement is presented on the mobile device. The advertisement may be supplied from the advertisement database 126 illustrated in Figs. 5 and 16. More specifically, the advertisement may be generated based on the advertisement content 510 illustrated in Fig. 5. The advertisement may be presented on the mobile device as a banner, in a specialized ad window, or the like. In some implementations, the advertisement may be integrated with a map so that the user can easily identify the location of the merchant that corresponds to the advertisement. The advertisements may remain on the mobile device for variable periods of time. Some advertisements may expire after a fixed amount of time such as one minute. Advertisements may also expire based on geolocation of the mobile device so that when the mobile device leaves a geolocation near the merchant, that merchant's advertisement is replaced by a different advertisement.

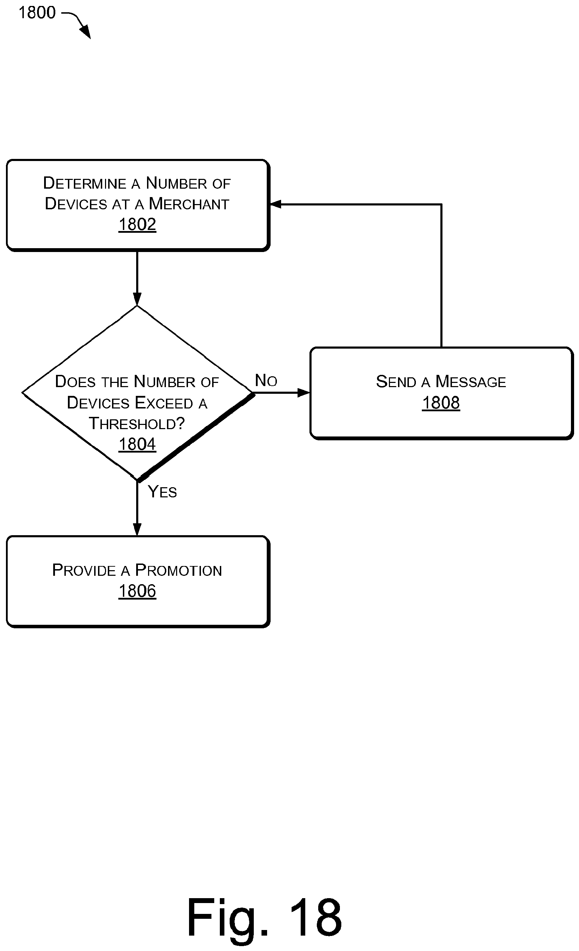

Fig. 18 illustrates process 1800 for providing a promotion to devices when a number of devices at a merchant exceeds a threshold. Advertisements may contain information touting the virtues of a merchant or the advertisements may also include a coupon or some type of promotion that may incentivize users to visit the merchant. Merchants may desire driving a large amount of traffic through their stores and choose to structure promotions to incentivize many users to come into their stores at the same time. This may also contribute to a certain atmosphere or ambiance of a busy, lively merchant. Social networking functionality on mobile devices may be used to spread these types of promotions "virally" or directly from user to user.

At operation 1802, a number of mobile devices at a merchant is determined based on geolocation information provided by each of the mobile devices. For example, each mobile device could detect its own geolocation based on a satellite or other system, and expose that information to a server(s) 118 for inclusion in a map 310 in which the geolocations of multiple mobile devices are correlated with the geolocation of a merchant. The number of mobile devices may represent a number of unique users present at that geolocation.

Next, at decision point 1804, the number of mobile devices at the merchant is compared to a threshold number. The threshold number may be set by the merchant as, for example, a number of people the merchant would like to have on its premises. In this implementation, the threshold may be an integer number. The threshold number may be based at least in part on a number of mobile devices at the merchant for which the merchant is designated as a trusted merchant. For example, if the merchant wishes to bring in new users with the hopes that they will designate this merchant as a trusted merchant, the threshold may be set as a ratio such the threshold is exceeded when, for example, more than a third of all mobile devices present do not designate this merchant as a trusted merchant. When the number of mobile devices at the merchant exceeds the threshold number, process 1800 proceeds from decision point 1804 along the "yes" path to operation 1806 and provides a promotion to the users. The promotion may be a discount for a good or service available at the merchant. The promotion may be provided to all the users present at the merchant or to only a subset. For example, to reward loyal customers, a coupon may be sent to the mobile devices of users who have transacted with this merchant in the past.

The promotion may be personalized for each of the users of the mobile devices based on user information associated with the mobile device. This using information may be the same as the user information 210 illustrated in Fig. 2 or the user information 122 illustrated in Fig. 4. For example, in a coffee shop each user may receive a coupon for one dollar off the coffee drink he or she has indicated as a favorite drink. Other user information may also be analyzed to personalize the promotions. The coupon may incentivize the user to return to the merchant by providing a discount at a later time (e.g., this coupon is valid from tomorrow for the next 10 days) or by geolocation (e.g., please use this coupon at one of our other stores). The coupon may also be associated with the user identification so that the coupon is applied automatically the next time that user conducts a transaction with that merchant.

If however, the number of mobile devices at the merchant does not exceed the threshold, process 1800 may proceed along the "no" path to operation 1808 and send a message to the mobile devices. The message may be a notification of how many more devices must be present at the merchant in order to cross the threshold. This could be a source of viral marketing by encouraging users to call or text their friends to come to this merchant location-with their mobile devices-so that the threshold is crossed and everybody receives the promotion. In implementations, in which mobile devices are counted as being at the geolocation of the merchant only when the user of that mobile device opts to expose his or her geolocation to the merchant this may encourage reticent users to share this information in order to receive the promotion. Many other implementations that take advantage of the "peer pressure" effect by providing a promotion for aggregate behavior are also possible.

There may also be instances in which a large number of customers, as indicated by a number of mobile devices, may be undesirable to the merchant and or the users. Thus in one implementation, the "advertisement" may comprise a notification about how many mobile devices are present at a merchant and to what extent this number exceeds a maximum or threshold number. For example, a restaurant may report that more mobile devices are present at its geolocation than the restaurant has seats. With this information a user could be forewarned that he or she may have to wait for a table at that restaurant. As another example, an airline may identify mobile devices of users scheduled to be on a flight that are not yet at the airport (or not within a threshold distance of the boarding gate) to inform these users that the fight is overbooked. This implementation may use geolocation in conjunction with user information 122 (e.g., the flight reservation) to provide an offer to take a later flight (perhaps in exchange for an upgrade or such) to those customers most likely to avail themselves of that offer. In these instances the process flow from decision point 1804 may be switched in that the message is sent out if the number of user devices exceeds the threshold number.

After sending the message at operation 1808, process 1800 may return to operation 1802 and again determine a number of devices at the merchant. This may repeat until the threshold is crossed or until a period during which the promotion periods ends. The process illustrated in Fig. 16 may be combined with process 1800. For example, merchants may bid for the right to send an advertisement that comprises a promotion.

### Location-based Coupons

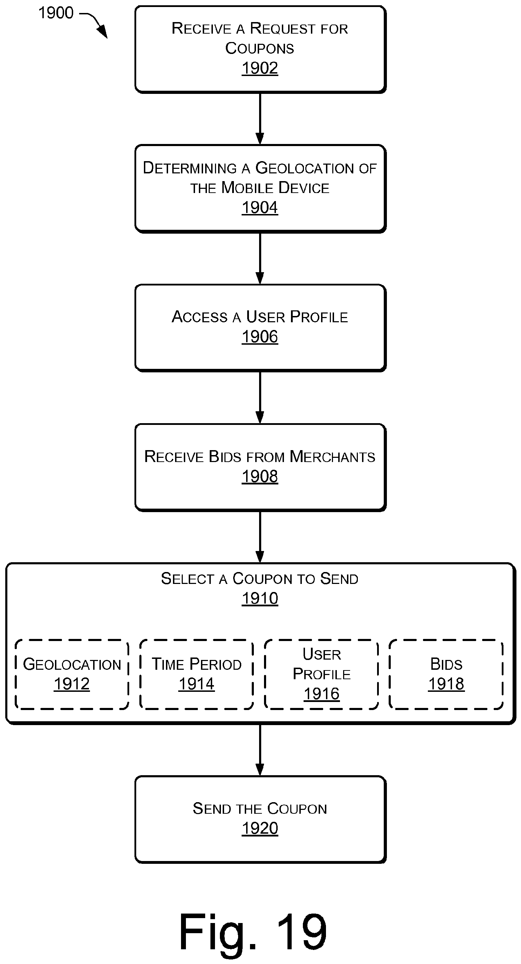

Fig. 19 illustrates process 1900 for providing geo-relevant coupons to a mobile device. Coupons represent one type of promotion or advertisement that may be sent from merchants to mobile devices. Geo-relevant coupons can be thought of as relevant to a particular location when a merchant that accepts the coupon is located nearby. When a user is presented with coupons that are relevant to his or her current location, as opposed to all available coupons, the friction associated with selecting and using a coupon is minimized. The incentive of receiving a discount by using the coupon combined with geographic proximity of the merchant may encourage users who would otherwise bypass a merchant to stop in and make a purchase.

At operation 1902, a computing device such as the server 118 shown in Fig. 1 may receive a request for one or more coupons that are relevant to a geolocation of the mobile device. In some implementations, a user of the mobile device may initiate the communication by pressing, for example, a "send me coupons" button. In other implementations, the communication may be initiated automatically by the mobile device. For example, the user may have previously indicated a willingness to receive geo-relevant coupons when such coupons become available.

At operation 1904, the geolocation of the mobile device is determined. The geolocation may be determined by the location sensor 230 of Fig. 2 using, for example, GPS technology.

At operation 1906, a user profile such as the user profile 404 shown in Fig. 4 may be accessed by, for example, the server 118. The user profile may contain information about the user such as a wish list of goods or services for which the user has previously expressed interest. The wish list may be a list of things that the user wishes to purchase for himself or herself or the wish list could be a shopping list or a lists of gifts to buy for other people. The user profile may also contain a transaction record such as the transaction record 406 shown in Fig. 4. The transaction record may identify goods or services that the user previously purchased.

At operation 1908, bids for the privilege of sending a coupon to the mobile device may be received from merchants. The coupon may function as a form of advertising and merchants that wish to send coupons to the mobile device may be charged for sending coupons. In some implementations, the merchant with the highest bid may be allowed to send coupons to the mobile device.

At operation 1910, a geo-relevant coupon is selected to be sent to the mobile device. The selection may be based on the geolocation 1912 of the mobile device. The selected coupon is geo-relevant because it is redeemable at a merchant location that is relatively nearby the current location of the mobile device. As discussed above, the concept of "near" may be determined by presence of the mobile device within a predetermined proximity of a merchant location.

In some implementations, other factors may also be used to select the coupon. For example, a coupon may have a limited time span during which it is valid. A coupon for a restaurant may only be valid from Sunday to Thursday. A coupon for a coffee shop may only be valid after 11:00 AM. Thus, the user may need to be at the right place (i.e., geolocation) and be there at the right time in order to use a coupon. Thus, sending a coupon to the user that cannot be used in the near future either because of geographic or temporal limitations may be frustrating and of limited use to the user. Therefore, the operation 1910 may also select the geo-relevant coupon based on a time period 1914 for which the geo-relevant coupon is valid.

Additionally, the user profile 1916 may be used to select a geo-relevant coupon to send to the mobile device. If the user profile includes a wish list, a coupon for a good or service included on the wish list may be selected. Similarly, if the user profile 1916 includes a transaction record, the coupon sent to the mobile device may be based on the transaction record. For example, inferences may be made about what the user is likely to buy in the future based on past purchases recorded in the transaction record. Therefore, coupons for goods or services that are likely of interest to the user may be selected based on the transaction record.

Selecting the coupon to send to the mobile device may also be based on bids 1918 received from the merchants at operation 1908. For example, if the mobile device is near to competing merchants, those merchants may wish to send their coupon to the mobile device and prevent the competitor from sending a coupon. Thus, the bids 1908 may be an additional factor used in selecting the coupon to send to the mobile device. In some implementations, the winning merchant may not pay the bid amount unless the user actually redeems the coupon. Any combination of the above factors (e.g., geolocation 1912, time period 1914, user profile 1916, and/or bids 1918) may be used to select the coupon to send to the mobile device.

At operation 1920, the selected geo-relevant coupon is sent to the mobile device. The coupon may be sent wirelessly as a signal from, for example, the radio antenna 114 shown in Fig. 1.

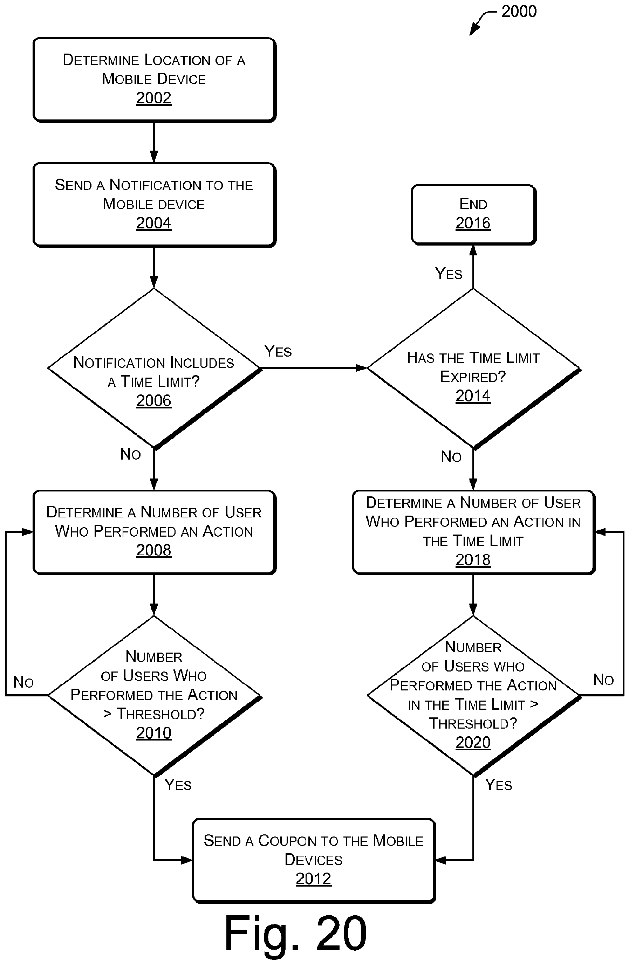

Fig. 20 illustrates process 2000 for providing coupons to mobile devices based on aggregate group behavior. As discussed above, merchants may desire more (or fewer) customers to come to a merchant location. One way of incentivizing behavior is by providing coupons based on aggregate or group behavior. For example, coupons may be made available to all the mobile devices at a merchant location when the number of mobile devices exceeds a threshold, but coupons may not be provided to any of the mobile devices until that threshold is reached.

At operation 2002, is determined that a mobile device is within a predetermined proximity of a merchant. The determination of presence within a predetermined proximity may be similar to that discussed above.

At operation 2004, a notification is sent to the mobile device responsive to the determination that the mobile device is within the predetermined proximity. The notification may include a request for the user to perform an action and an indication of a threshold number of other users of mobile devices within the predetermined proximity of the merchant that must also perform the action before a coupon will be sent to the mobile devices. The action may be logging in to an account maintained on a communications network such as the network 116 shown in Fig. 1. Logging in may be a signal that the users are present and ready to receive a coupon. The users may login to, for example, the server 118 or the merchant server 108. Other actions may such as making a purchase at the merchant, sending a message inviting a friend to come to the merchant, and the like may also be requested.

The notification may also include a description of the coupon. For example, the notification may indicate that everyone will receive a one dollar off coupon for a cup of coffee if 10 people come to this coffee shop and login to their accounts.

At decision point 2006 is determined if the notification includes a time limit. In some implementations, there may be a time limit within which the users must perform the action. In such implementations, the notification sent at operation 2004, may also include an indication of the time limit. At decision point 2006, When the notification does not include a time limit, process 2000 proceeds along the "no" path and continues to operation 2008. When the notification does include a time limit, process 2000 proceeds along the "yes" path to decision point 2014.

At operation 2008, a number of users within the predetermined proximity that have performed that action is determined. If the action is logging in to a web-based service or account then an entity that manages the service or account may count the number of user based on the logins.

At decision point 2010, the number of user within the predetermined proximity that has performed the action is compared to the threshold number provided in the notification sent at operation 2004. If it is determined that fewer than the threshold number have performed the action, process 2000 proceeds along the "no" path and returns to operation 2008 to again determine how many user within the predetermined proximity have performed the action.

When the number of users exceeds the threshold, process 2000 proceeds along the "yes" path to operation 2012. At operation 2012, a coupon redeemable at the merchant is sent to the mobile devices of the users that performed the action.

Returning to decision point 2006, when the notification indicates a time limit and process 2000 proceeds along the "yes" path to decision point 2014. At decision point 2014, it is determined if the time limit has expired. If the time limit has a definite end period then once that time is reached no more coupons will be sent to users. Thus, if it is determined that the time limit has expired, process 2000 proceeds along the "yes" route to operation 2016 when there process 2000 ends.

When the time limit has not yet expired, either because the time during which coupons are sent has not yet started or is currently ongoing, process 2000 proceeds along the "no" route to operation 2018.

At operation 2018, the number of users within the predetermined proximity that have performed the action within the time limit is determined.

At decision point 2020, the number of users within the predetermined proximity that have performed that action within the time limit is compared to a threshold number. When fewer than the threshold number have performed the action process 2000 proceeds along the "no" path and returns to operation 2018 where the number of users within the predetermined proximity that have performed the action within the time limit is again determined.

When more than the threshold number of users has performed the action, process 2000 proceeds along the "yes" path to operation 2012 where the coupon redeemable at the merchant is sent to the mobile devices of the users that performed the action within the time limit.

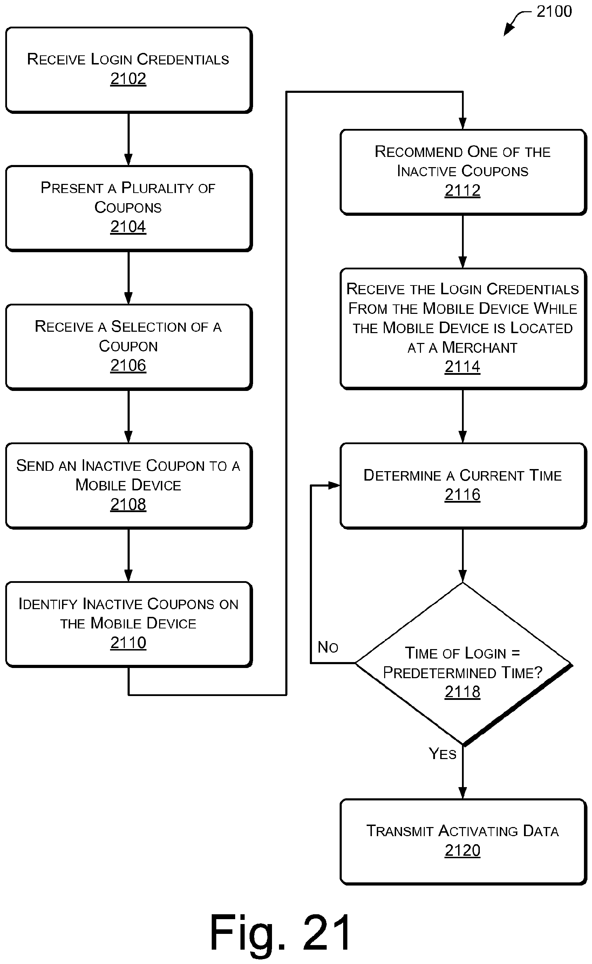

Fig. 21 illustrates process 2100 for activating a coupon on a mobile device in response to a user of the mobile device logging in to a server or other computing device. In some implementations, the user may wish to select and download coupons to his or her mobile device in advance. One way of doing this may involve the user accessing an account from a desktop computer, or some other computing device that may be different than the mobile device, and selecting coupons that are then pushed to the mobile device or associated with a unique identifier of the user and later retrieved from the mobile device.

At operation 2102, login credentials of the user are received. The login credentials may be entered from the mobile device or from another computing device such as a desktop computer. In some implementations, the login credentials may also indicate membership in a group that has special privileges or otherwise could receive coupons different from those provided to users who are not members of the group. For example, a coupon redeemable at a store where membership is required (e.g., Costco, Bi-Mart, etc.) may only be sent to users that are members. The login credentials of the user may also be associated with the transaction record of the user.

At operation 2104, a plurality of coupons available on a network-accessible database such as, for example, the advertisement database 126 shown in Fig. 4 may be presented to the user. The network-accessible database may be accessible through the Internet and presented in a user interface as a webpage. In other implementations, the network-accessible database may be implemented like an app store (or in this case a "coupon store") that is available from a limited network such as a network operated by a mobile phone service provider.

At operation 2106, a selection by the user of a coupon redeemable at a merchant from the plurality of coupons is received. The user may also select more than one coupon at a time.

At operation 2108, an inactive version of the coupon may be sent to the mobile device. The inactive version may be a placeholder or abbreviated representation of the coupon. This may be characterized by having a small file size but also uniquely identifying the coupon itself. The inactive version may also be implemented by providing a complete coupon with all the information necessary for the coupon to be redeemed, but blocking or otherwise inactivating the coupon until a code, token, key, or similar data to activate the coupon is provided.

At operation 2110, coupons for which inactive versions are present on the mobile device may be identified. This may be thought of as creating a list of those coupons that the user has already downloaded to his or her device and are ready to be used once activated.

At operation 2112, one of the inactive coupons identified at operation 2110 may be recommended to the user. The recommendation may be based on any number of factors such as the geolocation of the mobile device, the transaction record of the user, and the like. The user may forget which coupons he or she has available on his or her mobile device or the user may not realize that a merchant for which he or she has already downloaded a coupon is nearby. Recommending a coupon to the user may help the user fully utilize his or her coupons.

At operation 2114, the login credentials are received from the mobile device while the mobile device is located within a predetermined proximity of the merchant. For example, after arriving as a merchant (or at the parking lot in front of the merchant) the user may manually enter his or her login credentials in order to access a coupon, inform the merchant that he or she has arrived, or for another reason. In some implementations, the user may set the mobile device to automatically send a message when the mobile device enters the predetermined proximity of the merchant. By providing the user login credentials automatically, friction involved with redeeming a coupon may be reduced.

At operation 2116 a current time is determined. The current time may be determined by the calendar/clock 228 shown in Fig. 2. In some implementations the current time may be the time when the login credentials are received in operation 2114.

At decision point 2118, a time of receiving the login credentials of the mobile device may be compared with a predetermined time. When the time of receiving the login credentials matches the predetermined time, process 2100 follows the "yes" path and proceeds to operation 2120. When the time of receiving the login credentials does not match the predetermined time, process 2100 follows that "no" path and returns to operation 2116 to redetermine the current time. In implementation in which providing the login credentials serves to determine the time, the user may need to re-enter or re-transmit login credentials to reset the current time.

At operation 2120, data that activates the coupon is transmitted to the mobile device. The data may be a code, a token, a key, or the like. Once activated, the user may elect to use a coupon by presented to the merchant either as a visual image shown on a display of the mobile device (e.g., a barcode or another code that an employee enters into a point-of-sale terminal) or in some implementations the coupon may be automatically applied when the user makes a purchase using the mobile device.

### Illustrative Notifications and Recommendations Based on Geolocation

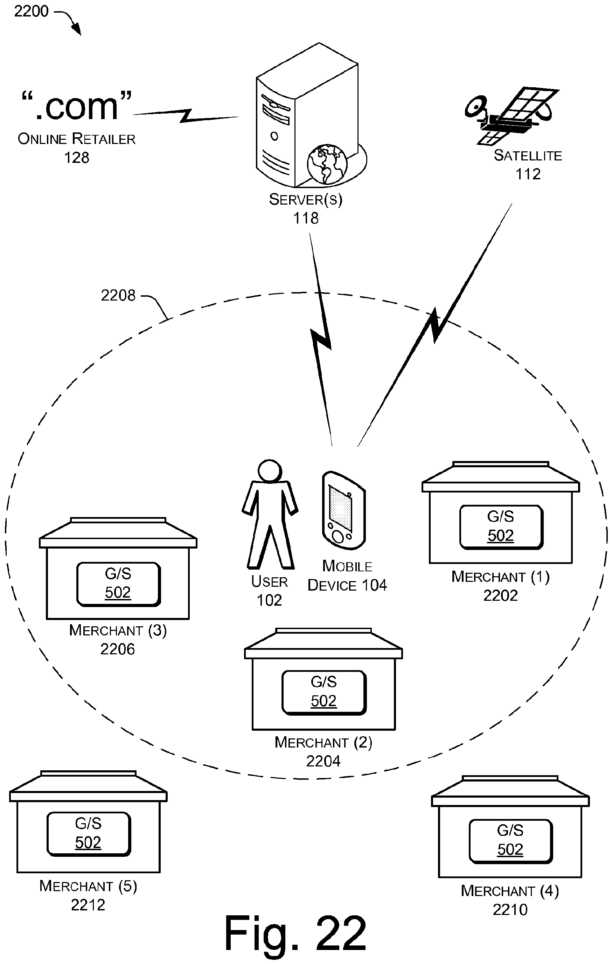

Fig. 22 shows an illustrative architecture 2200 in which a representative user 102 receives information about nearby merchants on a mobile device 104. The user 102 and his or her mobile device 104 may be located near several merchants represented here as merchant (1) 2202 merchant (2) 2204, and merchant (3) 2206. The merchants may be similar to the merchant 106 shown in Fig. 1. The location of the mobile device 104 may be determined by the location sensor 230 shown in Fig. 2. For example, the satellite 112 may provide global positioning information to the mobile device 104. The locations of the various merchants 2202, 2204, and 2206 may be provided directly to the mobile device 104 (e.g., by wireless radio wave transmissions) or included as a geolocation 500 stored in a merchant profile 122 available to the server(s) 118. In this implementation, the server(s) 118 may compare a geolocation of the merchants 2202, 2204, and 2206 with a geolocation of the mobile device 104 to determine the relative proximity of the user 102 with the merchants 2202, 2204, and 2206.

The concept of "near" may be determined by a predetermined proximity, such as a circle 2208, centered on the user 102 and the mobile device 104. The size of the circle 2208, which may be represented by a radius, may vary based on geolocation of the mobile device 104, user preferences set by the user 102, a strength of wireless signals received by the mobile device 104, or other factors. The size of the circle 2208 may also vary over time and vary based the nature of an interaction between the user 102 and the mobile device 104. Although illustrated here as a circle 2208, the predetermined proximity relative to the mobile device 104 may have any shape. For example, if the user 102 is in an urban environment where streets are arranged in a regular grid pattern, the shape may be a square or rectangle.

The location of the circle 2208 or the point about which the circle is centered may in some implementations be based on a fixed location rather than the current location of the mobile device 104. For example, the user 102 may provide his or her home, work, or other address. The user 102 may frequently shop around this fixed location and may also frequently return to this fixed location. Thus, in some implementations the user 102 may receive notifications of coupons that are useful at merchants near his or her home, office, etc. even when his or her mobile device 104 is at another geolocation.

The architecture 2200 also shows a merchant (4) 2210 and a merchant (5) 2212 that are outside the predetermined proximity of the mobile device 104. In some implementations, information about these merchants 2210 and 2212 may not be provided to the user 102 because the merchants 2210 and 2212 are deemed too far away. Although three merchants 2202, 2204, and 2206 are shown as being within the predetermined proximity and two merchants 2210 and 2212 are shown as being outside of the predetermined proximity, these numbers are only illustrative and any number of merchants (including zero) may be inside or outside of the predetermined proximity.

Each of the merchants 2202, 2204, 2206, 2210, and 2212 may be associated with goods/services 502 offered for sale by that merchant. The specific goods/services that are available may be identified by the server(s) 118 in reference to the merchant profiles 122 of each of the respective merchants 2202, 2204, 2206, 2210, and 2212.

The server(s) 118 may also have access to the user information 120 as shown in Fig. 4. The user identifier 208 associated with the mobile device 104 and that user's user information 120 may allow the server(s) 118 to compare a list of items of interest 408 to the user with the goods and/or services 502 offered for sale by the various merchants. When there is a match and the matching merchant is within the circle 2208 or predetermined proximity of the mobile device 104, the user 102 may be notified of the match.

One or more online retailers 126 may also be in communication with the server(s) 118 and or in communication with the mobile device 104. In some implementations, the server(s) 118 may compare goods and/or services offered by the online retailer(s) 126 with goods and/or services 502 offered by the nearby merchants 2202, 2204, and 2206 and make a recommendation to the user 102 that includes either or both of the offerings from the online retailer(s) 126 and from the nearby merchants 2202, 2204, and 2206.

The information provided to the user 102 in the form of a notification, recommendation, or communication may be a type of advertisement in which the nearby merchants 2202, 2204, and 2206 compete with other brick-and-mortar merchants as well as the online retailers 128 to make a sale to the user 102. For example, the nearby merchants 2202, 2204, and 2206 may use data from the "online world" such as the transaction record 406 or list of items of interest 410 to the user to try to drive brick-and-mortar sales. Alternatively, the merchants 2202, 2204, and 2206 may submit lists of goods and/or services available for sale as well as promotions such as coupons to an online repository such as the merchant profiles 124 shown in Figs. 1 and 5. The online repository (e.g. server(s) 108 connected to the merchant profiles 122) may analyze characteristics of the users to determine which users receive promotions or notifications regarding the merchants 2202, 2204, and 2206. Conversely, the online retailers 128 may have information about their items sent together with information about the items 502 at the local merchants 2202, 2204, and 2206. If the online retailers 128 can offer a lower price, this may dissuade the user 102 from making a purchase from the brick-and-mortar merchant. Other types of competitive and collaborative relationships between online retailers and off-line merchants that utilize geolocation of the mobile device 104 and user information 120 are discussed below.

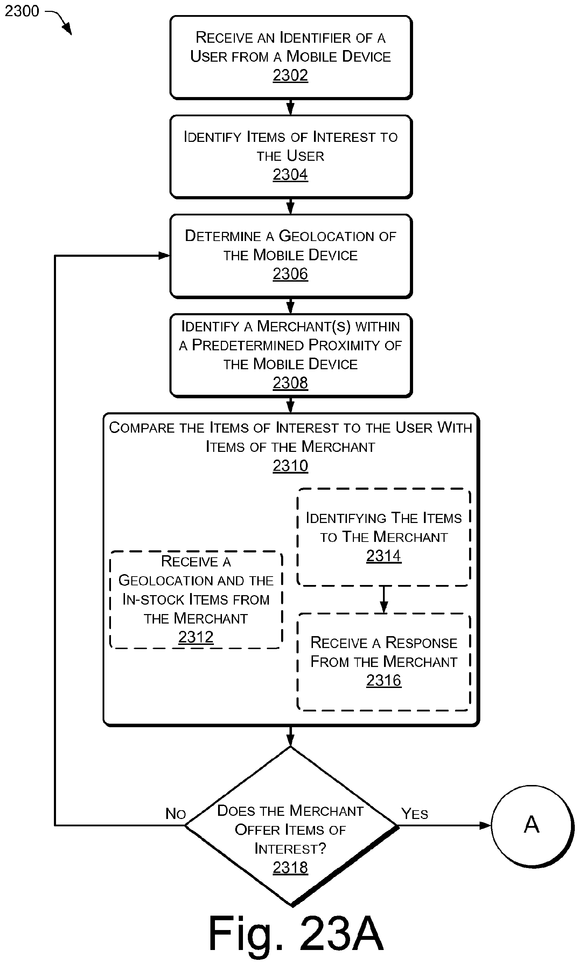

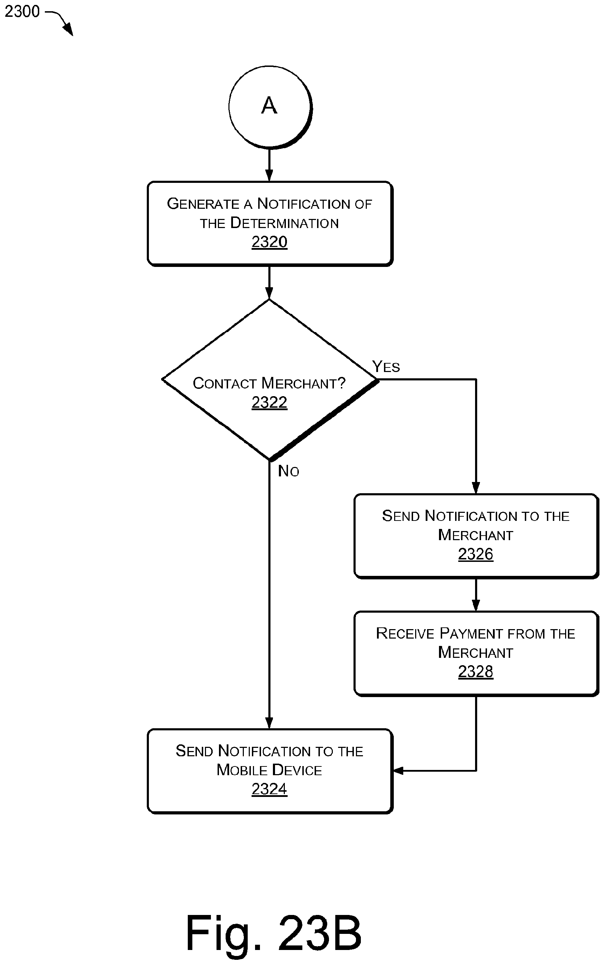

Figs. 23A and 23B illustrates a process 2300 for sending a notification about items available at a merchant to a user of a mobile device. At operation 2302, an identifier of a user is received from a mobile device. The identifier of the user may be the same or similar to the user identifier 208 shown in Figs. 2-4.

At operation 2304, items of interest to the user may be identified. Identification of which items are of interest to the user may be based on the identifier of the user. The items of interest to the user may be a list of goods and/or services that the user has previously viewed, a wish list of goods and/or services, a list of goods and/or services included in a shopping cart that the user has with an online retailer, items identified in a user profile associated with the user, or another similar source of information about the user's interests. The user profile may be similar to the user profile 404 shown in Fig. 4. For example, the user may also manually select categories of goods and/or services of interest and these categories may be stored as part of the user profile. The user profile may also be linked to a social network or list of friends and items of interest to the user may be inferred from items or interest, including items purchased, by friends or social network contacts. The user profile may also be partially or entirely imported from an external source such as a website managing the social network. The identifier of the user may provide access to the user's account on the social network (or other) site, and thus, provide access to an external user profile.

At operation 2306, a geolocation of the mobile device is determined. The geolocation may be determined by the location sensor 230 shown in Fig. 2.

At operation 2308, a merchant or plurality of merchants is identified that is within a predetermined proximity of the geolocation of the mobile device. The merchant(s) may be identified by referencing a map of merchant locations and comparing the map with the geolocation of the mobile device to determine distances between the mobile device and various merchants. The predetermined proximity may be a distance such as a radius that forms a circle around the user as shown in Fig. 22.

At operation 2310 the items identified at operation 2304 are compared with items offered by the merchant identified at operation 2308. Conversely, the items offered by the merchant at operation 2308 may be compared with the items identified at operation 2304. This way, the merchant may identify if its offered items are similar to any of the items of interest to the user. The offered items may include any goods and/or services in the inventory of that merchant.

In one implementation, the geolocation of the merchant and the currently in stock items of the merchant may be received from the merchant at operation 2312. For example, the merchant may submit its geolocation and list of current inventory to a server for incorporation in a merchant profile such as the merchant profiles 124 shown in Fig. 5. A server, such as the server(s) 118 discussed above, may compare the items of interest to the user and the merchant's inventory without revealing any of the user's information to the merchant. This may allow the user to receive the benefit of knowing when a nearby merchant is offering items that match, or are related to, his or her interests without having to reveal information to the merchant.

In another implementation, a list of the items of interest to the user is provided to the merchant at operation 2314. The comparison may be performed by the merchant and then a response may be received from the merchant at operation 2316. Either or both of the user and the server may receive the response. The response may indicate a "yes" or "no" depending on if the merchant has items that match the user's interests. The response may also indicate a payment or payment commitment from the merchant to the source (e.g., the server) that identified the items of interest to the user. Providing the items of interest to the user directly to the merchant may allow the list to be compared with the merchant's inventory without requiring a server. This may be appropriate when the mobile device can communicate directly with the merchant, but the mobile device is unable to access a network connection for communicating with a server.

Irrespective of the techniques used for making the comparison, at operation 2318, it is determined whether or not the merchant offers items of interest to the user or items related to items of interest to the user. For example, if a baseball is an item of interest to the user it may be inferred that a bat or glove, although not direct matches, would also be of interest to the user. If no match exists, process 2300 proceeds along the "no" path and returns to operation 2306. As the mobile device moves, different merchants may come within the predetermined proximity of the mobile device and one of these new merchants may offer an item that is of interest to the user. If the merchant does offer an item of interest to the user, process 2300 proceeds along the "yes" path. The following portions of process 2300 are shown on Fig. 23B.

At operation 2320, a notification of the determination from operation 2318 is generated. The notification may simply state that a match exists. However, the notification may also identify such things as which item of interest to the user is offered by the merchant, which nearby merchant offers that item for sale, a map to the merchant, a price of the good or service, any coupon or discount available for the good or service, a redemption period for the coupon or discount, a maximum number of items available per person, and/or other information.

When a plurality of merchants is identified at operation 2308, the notification may include a list or map of those merchants. If the identified merchants are relatively nearby (e.g., within 100 yards) the notification may be a list of the merchants showing a distance to the merchants. If the identified merchants are farther away (e.g., within five miles) the notification may include a map showing the locations of the merchants. The notification may also include the price of the item at the merchants so that the user can easily compare prices.

At operation 2322, a decision is made to contact or not to contact the merchant. This decision may be based on a user profile or other type of information about the user that is associated with the identifier of the user. When the merchant is not contacted, process 2300 proceeds along the "no" path to operation 2324.

At operation 2324, the notification generated at operation 2320 is sent to the mobile device. For example, the items identified at operation 2304 may be a list of goods and/or services the user has on a shopping list for Christmas or another holiday. As the user, with his or her mobile device, moves through a shopping mall the mobile device may receive a series of notifications telling the user which items from his or her shopping list are at which stores. This may allow the user to quickly find and purchase the items on his or her list and this technique may also allow the user to find the merchant with the lowest price for items on the list.

If at operation 2322 the decision is made to contact the merchant, then process 2300 proceeds along "yes" path to operation 2326. At operation 2326, the notification generated at operation 2320 is sent to the merchant. Once informed that the merchant offers items that are of interest to the user, the merchant may wish to contact the user of the mobile device with the hope of making a sale. The decision to contact the user may be based on an available and unused inventory of the merchant. For example, if the merchant is a service provider like a spa or a restaurant the merchant may have relatively fixed costs, and thus, be concerned about minimizing unused capacity. The merchant may decide how many users to contact and how aggressively to promote a item of interest to the user based on the merchant's excess capacity or excess inventory.

At operation 2328, a payment may be received from the merchant. The payment may be received by a server implementing the process 2300 such as, for example, the server(s) 118 shown in Figs. 1 and 3. The payment may be received and processed by the payment module 318 shown in Fig. 3. Responsive to receiving the payment, the process 2300 may proceed to operation 2324 and send a notification to the mobile device. The payment amount may be arrived at through a bidding process between multiple merchants. For example, when more than one merchant within the predetermined proximity of the mobile device has the same good or service for sale, each of those merchants may place competitive bids and the merchant with the winning bid may be included in the notification sent to the mobile device at operation 2324.

The notification to the mobile device sent at operation 2324 may also included a coupon for one of the goods or services of interest to the user. Merchants may choose to have coupons included in the notification in order to encourage the user to purchase the good or service that matches his or her interests. The user's interest may be determined from the user information 120 shown in Fig. 4. In some implementations, data mining techniques may be applied to the user information in order to infer the user's interests. For example, if the user's interests are derived from an online shopping cart the user has established with an online merchant, the merchant may provide a coupon that lowers the price of the goods or service to equal or less than the price offered by the online retailer. The online retailers may choose to reveal the contents of online shopping carts and the price of the items in those shopping carts to the merchants only if the merchants compensate the online retailer for "taking" the sale. For example, if the online retailer's profit margin generates profits of one dollar for the sale of a certain good, then the online retailer may provide shopping cart information to the merchant in exchange for a fee of one dollar. The fee may also be contingent on whether or not the user actually purchases the good from the merchant. In some implementations, payments from the merchant to an online retailer may be mediated by the server(s) 118.

As discussed above, the notification may also be a map showing locations of merchants that have items matching the items of interest to the user. For example, each indication on the map of a merchant location may provide additional information about that merchant (e.g., in a pop-up window) such as the list of matching or similar items, item prices, identification of coupons or deals available to the user the mobile device, and the like.

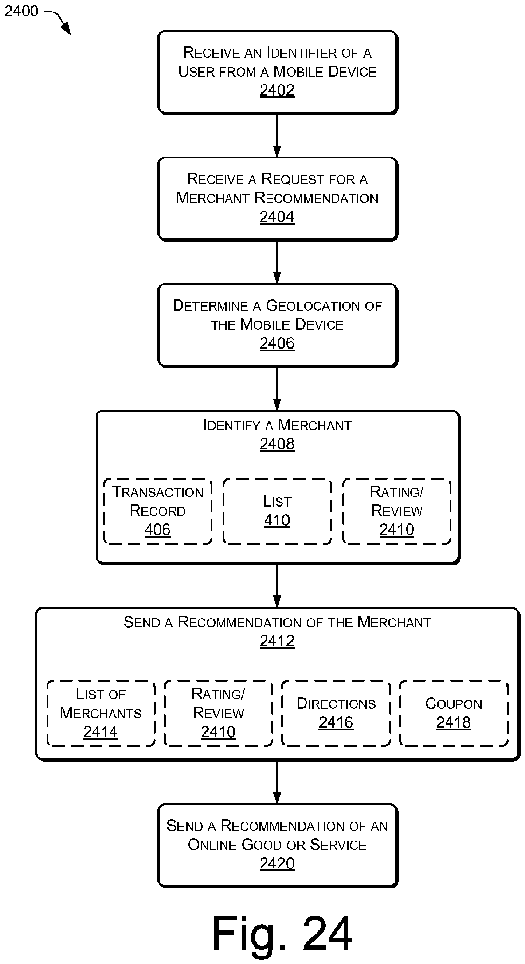

Fig. 24 illustrates a process 2400 for providing recommendations of online purchases together with information about a nearby brick-and-mortar merchant. At operation 2402, an identifier of a user is received from a mobile device. Similar to operation 2302 shown in Fig. 23, receiving an identifier of a user can function to associate information about the user with the mobile device.

At operation 2404, a request for recommendation of a merchant that is within a predetermined proximity of the mobile device is received. In some implementations, the request may be sent manually by the user of the mobile device for example in response to the user pressing a "recommend nearby merchants" button. In other implementations, the request may be transmitted automatically by the mobile device.

At operation 2406, the geolocation of the mobile device is determined. The geolocation may be determined by the location sensor 230 shown in Fig. 2.

At operation 2408, a merchant within the predetermined proximity of the mobile device that also provides a discount to the user of the mobile device is identified. The discount may be based on an attribute associated with the identifier of the user received at operation 2402. For example, if the user is a member of a group that receives a discount at a particular merchant, then that merchant may be identified if the user-member is within the predetermined proximity. If the merchant is nearby the users home or work address then the contact information of the user may be a source of determining eligibility for a discount. Similarly, financial information of the user such as a type of credit card owned by the user or a credit score may provide the user with access to discounts that are not universally available. When more than one merchant within the predetermined proximity of the mobile device offers a discount to the user of the mobile device, a plurality of merchants within the predetermined proximity may be identified. The geolocations of each of the plurality of merchants may be used to generate a map, for example with "flags" or "pins" in the map showing the location of the merchants. This map may be sent to the mobile device of the user so that the user can navigate to and select from the plurality of merchants.

In some implementations, a merchant or merchants may be identified based on a transaction record 406 of the user. For example, the transaction record 406 may identify merchants with which the user has a pre-existing relationship. The transaction record 406 may also identify merchants at which the user has previously used a coupon or otherwise received a discount.

In other implementations, the merchant may be identified based on a list of goods and/or services 410 of interest to the user. This list 410 may be any of the types of lists shown in Fig. 4 such as a list of goods and/or services that the user has previously viewed, a wish list of goods and/or services, a list of goods and/or services in a shopping cart associated with the user or a list derived directly or indirectly from information in a user profile of the user. For example, the user's interest may be inferred by identifying those merchants at which the user has logged in to an online system from his or her mobile device.

In further implementations, a merchant may be identified based on ratings or reviews 2410 of that merchant. The ratings and reviews 2410 may be the same as the ratings and reviews 506 from the merchant profiles 122 shown in Fig. 5. For example, only high-ranked merchants (e.g., four-star or five-star ranking) may be eligible to be identified. The use of ratings and/or reviews 2410 to identify merchant may also involve social networking as a source for the ratings and reviews 2410. Thus, ratings and/or reviews 2410 from others the user's social network may be a source, or the sole source, of ratings and reviews 2410 used to identify the merchant.

At operation 2412, a recommendation of the merchant is sent to the mobile device. In some implementations, the recommendation may be generated and sent by the recommendation module 310 of the server(s) 118 that is shown in Fig. 3. The recommendation provides user with information about a merchant that is both nearby and that provides a discount to the user.

The recommendation of the merchant may include a list of merchants 2414 when multiple merchants within the predetermined proximity match the criteria specified by the user. The recommendation may also be accompanied by ratings or reviews 2410 of the merchant derived from other users, professional reviews, and the like. The ratings and reviews 2410 may also be included in the recommendation. If the ratings and reviews 2410 were not used to identify the merchant at operation 2408, the user may consider the ratings and reviews 2410 when evaluating the recommendation. The recommendation may also included directions 2416 to the merchant. In some implementations, a coupon 2418 for the merchant may be included with the recommendation. The coupon 2418 may provide an additional discount beyond the discount associated with the user identifier. The recommendation sent at operation 2410 may also include any combination of the above features.

At operation 2420, a recommendation for a good or service available from an online retailer is also sent to the mobile device. This recommendation may be generated by the recommendation module 316. The recommendation for the good or service available online may be an advertisement that encourages the user to purchase the good or service from the online retailer. The good or service available online may be competitive with the goods and/or services offered by the merchant recommended at operation 2410. In other words, the user may be provided with information about where to purchase a good or service at a nearby merchant and information about how to purchase a same or similar good or service from an online retailer.

In some implementations, the online retailer may pay an advertising fee (e.g., to the entity that operates the server(s) 118) in order to have a recommendation sent to the mobile device. Conversely, the merchant may also be provided an opportunity to pay a fee to limit potential online competitors from having a recommendation piggybacked onto the recommendation of the merchant. For example, merchants may request that when they are included in a recommendation sent at operation 2412 that the recommendation for an online good or service sent at operation 2420 recommends something from that merchant's online store, recommends something from any online merchant except for a specified list of "rival" online merchants, or otherwise influence the recommendation provided that operation 2420. The online retailer and the merchant may also compete or bid against each other for control of the recommendation provided at operation 2420.

In other implementations, the good or service available from the online retailer may be a good or service that has been deemed complementary to the goods and/or services offered by the merchant. The user, the merchant, the online retailer, a server or any other entity may make determinations as to which goods and/or services are complementary.

### Illustrative Promotions Based on Geolocation

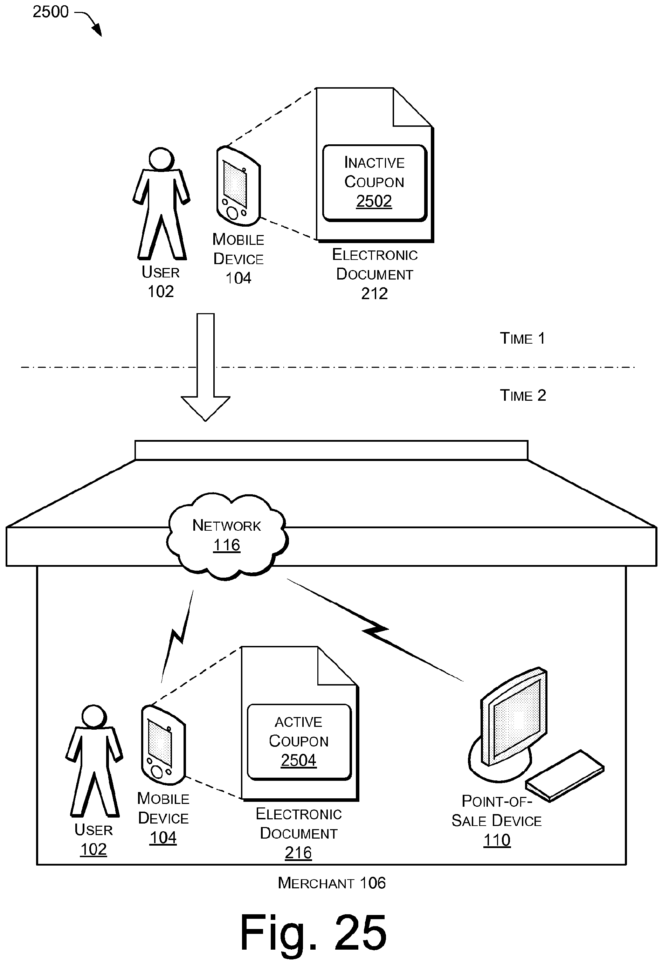

Fig. 25 shows an illustrative timeline 2500 showing activation of a coupon or other promotion when the mobile device 104 is at a merchant 106. The coupon, or other promotion, may be tied to a specific geolocation so that the user 102 can only redeem the coupon when he or she is located at a particular merchant 106. This may drive foot traffic to the merchant 106 because users may wish to activate and redeem the coupon. Even if the coupon is unrelated to the goods and/or services sold by the merchant 106, this may provide a benefit for the merchant 106 because the users once at the merchant 106 might purchase a good and/or service.

At time 1, the mobile device has an electronic document 216 stored in memory as shown in Fig. 2. In some implementations, this electronic document 216 may be an electronic book or an eBook. The electronic document 216 includes an inactive coupon 2502 within the document. The inactive coupon 2502 may be included as part of the text or other content of the electronic document 212. The inactive coupon 2502 may also be attached to or otherwise appended to the electronic document 212. The inactive coupon 2502 may also be provided as a stand-alone product that is not included in an electronic document 212.

When the user 102 and the mobile device 104 are not located at the merchant 106 the inactive coupon 2502 may remain inactive. The inactive/active status of the coupon may be regulated by the coupon activation module 214 of the mobile device 104 shown in Fig. 2. In some implementations, the inactive coupon 2502 may be concealed from the user 102 of the mobile device 104 until the mobile device 104 is located at the merchant 106. In other implementations, only one or more aspects of the coupon are concealed. Alternatively, all aspects of the coupon may be revealed to the user 102 even when the mobile device 104 is not located at the merchant 106. If the inactive coupon 2502 is provided by itself without an electronic document 212, the existence of the inactive coupon 2502 may not be wholly concealed from the user 102, but the specific nature of the "deal" or coupon may be concealed. For example, a user may be able to tell that he or she has an inactive coupon 2502 from a certain merchant, but not know what the coupon is for or the size of the discount. Curiosity may drive foot traffic to the merchants that provide this type of partially-hidden coupon.

In some implementations in which the coupon is fully concealed, the coupon may function like a surprise or "Easter egg" that unexpectedly rewards the user. Once one person discovers the existence of the coupon, this information may spread informally or "virally" and can create a further incentive for additional people to obtain the electronic document 212. In implementations in which only some aspects of the coupon are concealed, the merchant at which the coupon can be redeemed may be exposed to the user 102, but other details such as the amount of discount may remain concealed.

At time 2, when the user 102 and the mobile device 104 arrive at the merchant 106, the coupon may become an active coupon 2504. Activation may also be linked to time. A coupon may not become an active coupon 2504 unless the current time matches a time specified by the inactive coupon 2502. For example, in order to encourage repeat business a coupon may not be active until the following day. Thus, in some implementations, both time and place must be as specified in order for an inactive coupon 2502 to become an active coupon 2504.

Activation of the coupon may be implemented by the mobile device 104 receiving a signal from the point-of-sale device 110 or from the network 116. Activation may also be implemented by the coupon activation module 214 alone or in conjunction with other components of the mobile device 104 such as the location sensor 230 and/or the calendar/clock 228. The location sensor 230 may determine that the geolocation of the mobile device 104 corresponds to the geolocation of the merchant 106 and the coupon activation module 214 may activate the coupon. For coupons that are valid only during a certain time period, the calendar/clock 228 may also determine if the current time is within a time period specified for redemption of the coupon. At this point, any aspects of the coupon that were concealed may be revealed to the user 102.

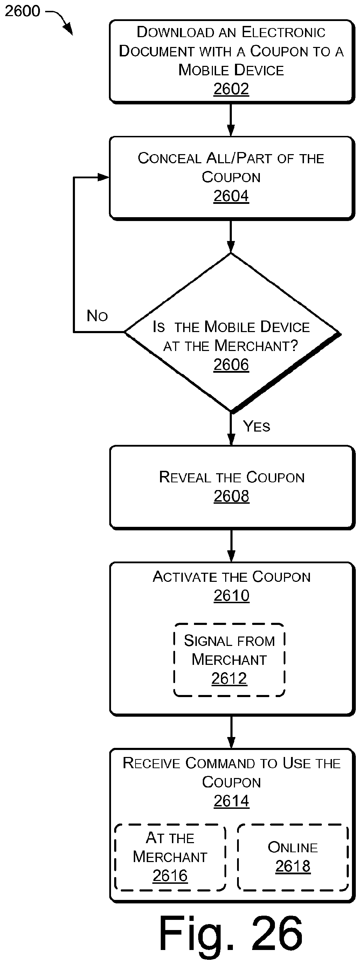

Fig. 26 shows an illustrative process 2600 for activating and using a coupon in an electronic document. At operation 2602, an electronic document containing a coupon may be downloaded to a mobile device. Depending on the relative perceived value of the electronic document and of the coupon, the user of the mobile device may choose to initiate the download primarily to receive the electronic document or primarily to receive the coupon.

At operation 2604, all or part of the coupon may be concealed when the mobile device is not located at the merchant. This may tie the value of the coupon to the user's presence at the merchant. Thus, for example, a coffee shop may pay to have coupons placed in eBooks in order to bring people into the coffee shop to redeem the coupon with the hope that those people will buy something from the coffee shop.

At operation 2606, it is determined if the mobile device storing, in memory, the electronic document that contains the coupon is at the merchant. The mobile device may be characterized as being "at" the merchant when the mobile device is within a predetermined proximity of the merchant. The mobile device may also be determined to be at the merchant when the mobile device receives a signal from the merchant. The signal may be a "heartbeat" or "ping" that is transmitted only over a short distance. When the mobile device is at the merchant, process 2600 follows the "yes" path to operation 2608. When the mobile device is not at the merchant, process 2600 follows the "no" path and returns to operation 2604 where all or part of the coupon may remain concealed.

At operation 2608, any part of the coupon that was concealed may be revealed or shown to the user. At operation 2610 when the mobile device is at the merchant, the coupon is activated. In some implementations the coupon activation module 214 of the mobile device may activate the coupon. The coupon may be activated in response to determining that the mobile device is located at the merchant in operation 2606. The coupon may also be activated in response to a signal from the merchant 2612.

At operation 2614, a command from the user of the mobile device to use the coupon as part of purchase of a good or service is received. The command may be an explicit command to use the coupon or the command may be implicit in that the coupon is automatically applied when the purchase is transacted. The transaction may be a purchase of a good or service at the same merchant where the coupon was activated 2616 or the transaction may be with an online retailer 2618. The transaction with the online retailer 2618 may be completed by using the mobile device.

If the active coupon is redeemed at the merchant 2616, the active coupon may appear in the electronic document as a machine-readable code such as a barcode that can be presented to the point-of-sale device at the merchant. The active coupon may also be a code or pass phrase that the user can show or tell an employee of the merchant in order to receive the discount.

In implementations in which, the coupon is be activated at the merchant, but redeemable at an online retailer 2618. The mobile device may connect to a network from within the merchant to use the active coupon at an online retailer. The active coupon may remain active once activated even if the mobile device later leaves the merchant or, in other implementations, the active coupon may revert to an inactive coupon once the mobile device is no longer located at the merchant.

### Conclusion

These processes discussed above are each illustrated as a collection of blocks in a logical flow graph, which represent a sequence of operations that can be implemented in hardware, software, or a combination thereof. In the context of software, the blocks represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described should not be construed as a limitation, and any number of the described blocks can be combined in any order and/or in parallel to implement the process.

Although the subject matter has been described in language specific to structural features and/or methodological acts, it is to be understood that the subject matter defined in the appended claims is not necessarily limited to the specific features or acts described. Rather, the specific features and acts are disclosed as illustrative forms of implementing the claims.
The following are the claims of the parent application as originally filed as PCT/US2011/028825 and are not the claims of the present divisional application.
1. One or more computer-readable storage media storing computer-executable instructions that, when executed by one or more processors, instruct a computing device to perform acts comprising:
   detecting that a mobile device is present within a predetermined proximity of a merchant location;
   determining if the merchant is a trusted merchant;
   when the merchant is a trusted merchant, logging in to the merchant;
   sharing information about a user of the mobile device with the merchant; and
   completing a purchase between the merchant and the user using the information about the user and at least partly in response to detecting that the mobile device is present within the predetermined proximity of the merchant location.
2. One or more computer-readable storage media as recited in claim 1, wherein the detecting is performed by at least one of the mobile device, the merchant, or a network component.
3. One or more computer-readable storage media as recited in claim 1, wherein the predetermined proximity is based at least in part on a density of other merchants in the merchant location.
4. One or more computer-readable storage media as recited in claim 1, wherein the merchant comprises a point-of-sale computer system and the sharing the payment information comprises communication between the mobile device and the point-of-sale computer system through a direct communications link.
5. One or more computer-readable storage media as recited in claim 1, wherein completing the purchase comprises automatically completing the purchase without the user interacting with the mobile device.
6. A mobile device comprising:
   one or more processors;
   a location sensor coupled to the one or more processors;
   a wireless network interface coupled to the one or more processors; and
   a memory coupled to the one or more processors, the memory comprising:
      a user identification module correlated with user information, the user information available on a network accessed by the wireless network interface; and
      a transaction module configured to interpret data from the location sensor, to recognize when the mobile device is present within a predetermined proximity of a merchant, and, based at least in part on recognizing that the mobile device is present within the predetermined proximity of the merchant, facilitate a transaction with the merchant using the user information.
7. The mobile device as recited in claim 6, wherein the user information comprises identification of merchants as trusted merchants, and the transaction module decreases an amount of user interaction used to complete the transaction as a trust level of the merchant increases.
8. The mobile device as recited in claim 6, wherein the transaction module authorizes a transaction with a merchant having a highest trust level automatically when the mobile device is within the predetermined proximity of the merchant and without further input from a user of the mobile device.
9. A computer-implemented method comprising:
   under control of one or more computer systems configured with executable instructions,
   detecting that a mobile device associated with a user is at a location of a merchant with whom the user has initiated a transaction;
   communicating a presence of the user to the merchant at least partly in response to detecting that the mobile device is at the location of the merchant, the communicating effective to enable the merchant to complete the transaction; and
   sending a message to the mobile device confirming completion of the transaction.
10. The computer-implemented method as recited in claim 9, wherein the transaction has been initiated on a computing device other than the mobile device and at a location other than the location of the merchant.
11. The computer-implemented method as recited in claim 9, wherein detecting that the mobile device is at the location of the merchant comprises detecting the presence of the mobile device within a threshold distance of the location of the merchant.
12. The computer-implemented method as recited in claim 9, further comprising providing user information associated with the user to the merchant to enable the merchant to modify the transaction based at least in part on the user information.
13. One or more computer-readable storage media storing computer-executable instructions that, when executed by one or more processors, instruct a computing device to perform acts comprising:
   determining that a mobile device is within a predetermined proximity of a merchant;
   responsive to the determining, sending a notification to the mobile device comprising (i) a request for a user of the mobile device to perform an action, and (ii) a threshold number of users of mobile devices within the predetermined proximity of the merchant to perform the action in order for a coupon to be sent to the mobile devices of the users that perform the action;
   determining a number of users within the predetermined proximity that have performed the action;
   comparing the number of users within the predetermined proximity that performed the action to the threshold number; and
   when the number of users within the predetermined proximity that performed the action exceeds the threshold number, sending a coupon redeemable at the merchant to the mobile devices of the users that performed the action.
14. One or more computer-readable storage media as recited in claim 13, wherein:
   the notification further indicates a time limit within which the threshold number of users are to perform the action:
      the determining comprises determining the number of users within the predetermined proximity that have performed the action within the time limit;
      the comparing comprises comparing the number of users within the predetermined proximity that performed the action within the time limit to the threshold number; and
      the sending of the coupon comprises sending the coupon when the number of users within the predetermined proximity that performed the action within the time limit exceeds the threshold number.
15. One or more computer-readable storage media as recited in claim 14, wherein the comparing further comprises comparing the (i) number of users within the predetermined proximity that performed the action within the time limit minus (ii) a number of users that have performed the action within the time limit and within the predetermined proximity then subsequent moved outside the predetermined proximity to (iii) the threshold number.

## Claims

1. A computer-implemented method for initiating a security event in response to a current temporal-geolocation of a mobile device varying from points in a map by more than a threshold amount, the computer-implemented method comprising:
storing, by one or more computing systems, at a plurality of different times and different locations, a geolocation of the mobile device and a timestamp associated with the geolocation to create temporal-geolocation data;
creating, by at least one of the one or more computing systems, the map for the mobile device based at least in part on the temporal-geolocation data;
comparing, by at least one of the one or more computing systems, a current temporal-geolocation with the map to determine if the current temporal-geolocation varies from the map by more than a threshold amount; and
initiating, by at least one of the one or more computing systems, a security event in response to the current temporal-geolocation varying from the map by more than the threshold amount.

2. The method as recited in claim 1, wherein the geolocations are stored at a regular frequency.

3. The method as recited in claim 2, wherein the regular frequency depends on a memory capacity of the mobile device or a velocity at which the mobile device is traveling.

4. The method as recited in any preceding claim, wherein the threshold amount is determined based at least in part on user input at the mobile device.

5. The method as recited in any preceding claim, wherein the threshold amount is determined based at least in part on calendar or scheduling information of the user.

6. The method as recited in any preceding claim, wherein the threshold amount is determined based at least in part on a presence of another mobile device in the vicinity of the mobile device.

7. The method as recited in any preceding claim, wherein the threshold amount is determined based at least in part on an absence of another mobile device in the vicinity of the mobile device.

8. The method as recited in claim 6 or 7, wherein the mobile device is associated with said another mobile device.

9. The method as recited in any preceding claim, wherein the security event comprises shutting down the mobile device, sending an automatic communication from the mobile device, or requiring input of a password.

10. The method as recited in any preceding claim, wherein the map is a multidimensional map comprising at least latitude, longitude, and time.

11. The method as recited in claim 10, wherein the presence or absence of other mobile devices in the vicinity of the mobile device comprises an additional dimension of the map.

12. The method as recited in any preceding claim, wherein the step of comparing comprises using at least one of artificial intelligence, heuristics, or fuzzy logic.

13. At least one computer system comprising computer-executable code that when executed by the at least one computer system causes the at least one computer system to perform a method according to any preceding claim.
